(19) Europäisches Patentamt
European Patent Office
Office européen des brevets

(11) EP 1 607 448 A2

# (12) EUROPÄISCHE PATENTANMELDUNG

(43) Veröffentlichungstag:
**21.12.2005 Patentblatt 2005/51**

(51) Int Cl.7: **C09C 1/36**

(21) Anmeldenummer: **05103230.8**

(22) Anmeldetag: **21.04.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **16.06.2004 DE 102004029069**

(71) Anmelder: **Degussa AG**
**40474 Düsseldorf (DE)**

(72) Erfinder:
- **Brinkmann, Ulrich**
  **67591 Mörstadt (DE)**
- **Götz, Christian**
  **53113 Bonn (DE)**
- **Christian, Hans-Dieter**
  **63755 Alzenau (DE)**

## (54) Oberflächenmodifizierte Silicagele

(57) Die Erfindung betrifft oberflächenmodifizierte Silicagele, ein Verfahren zu deren Herstellung und deren Verwendung als Mattierungsmittel in Lacken. Durch die Art der Oberflächenmodifizierung wird die Viskosität von 2-Komponentenlacken nach Zugabe des Mattierungsmittel nicht oder nur gering erhöht.

EP 1 607 448 A2

## Beschreibung

Die vorliegende Erfindung betrifft neue oberflächenmodifizierte Silicagele, ein Verfahren zu deren Herstellung sowie deren Verwendung.

Silicagele sind anorganische Oxide auf Basis von $SiO_2$. Man unterscheidet zwischen Hydrogelen, Aerogelen und/oder Xerogelen. Hydrogele - oder auch Aquagele - werden in Wasser hergestellt, daher sind ihre Poren mit Wasser gefüllt. Ein Xerogel ist ein Hydrogel, aus dem das Wasser entfernt wurde. Ein Aerogel ist ein Xerogel, aus dem die Flüssigkeit so entfernt wurde, dass sich die Struktur des Gels nur minimal verändert und das Porenvolumen weitgehend erhalten bleibt.

Silicagele sind lange bekannt (Iler, "Chemistry of Silica", S. 462 ff, 1979). Sie werden unter Bedingungen hergestellt, die ein Zusammenwachsen von Primärpartikeln (mittlere Partikelgröße bei 1 bis 10 nm) fördern, so dass sich im Gegensatz zu gefällten oder pyrogenen Kieselsäuren ein relativ starres dreidimensionales Netzwerk ausbildet. Daher unterscheiden sich Silicagelpartikel eindeutig von gefällten Kieselsäurepartikeln.

Die Herstellung von Silicagelen ist dem Fachmann wohl bekannt, siehe zum Beispiel US 4,097,302, DE 41 32 230, EP 0 384 226. Dabei werden Natriumsilikat und Schwefelsäure schnell und kontinuierlich bei niedrigen Temperaturen, niedrigem pH und hohen Konzentrationen miteinander vermischt, um ein Hydrosol zu bilden das wiederum nach kurzer Zeit zum Hydrogel kondensiert. Alternativ kann die Gelierung auch im Alkalischen erfolgen (siehe zum Beispiel GB 1,219,877, GB 1,279,250, WO9825 851 oder EP 0 588 497). Eine weitere Alternative wird in EP 0 765 764 vorgeschlagen.

Das entstandene Hydrogel wird in relativ kleine Stücke gebrochen und gewaschen, um lösliche Salze und Verunreinigungen zu entfernen. Während des Waschzyklus wird die Porenstruktur des Hydrogels durch Variation von pH-Wert (z. B. Zugabe von Basen wie z. B. Ammoniak), Temperatur und Zeit eingestellt. Die Vorgehensweise ist dem Fachmann wohlbekannt. Beispiele sind z.B. EP 0 384 226 oder WO00002814 zu entnehmen.

Im Anschluss an den Waschzyklus wird das gewaschene Hydrogel durch thermische Mittel getrocknet, um ein Silicagel bzw. Xerogel zu bilden. Die Art und Weise der Trocknung hat wesentlichen Einfluss auf das Porenvolumen des Silicagels. Bei schneller Trocknung kann das Porenvolumen weitestgehend erhalten werden, bei langsamer Trocknung verringert sich das Porenvolumen. Abschließend kann das Silicagel zu einer spezifischen Partikelgröße und -verteilung zerkleinert oder vermahlen werden.

Es ist Stand der Technik, dass synthetisch hergestellte oder natürliche Materialen, die als feinteilige Partikel vorliegen, als Mattierungsmittel in verschiedenen Anwendungen wie z. B. industrielle Beschichtungen, Leder- und Plastikbeschichtungen oder in Druckfarben eingesetzt werden. Idealerweise besitzen Mattierungsmittel folgende Eigenschaften: hohes Porenvolumen, enge Partikelverteilung, geeignete Partikelgröße abgestimmt auf die jeweilige Anwendung und enge Porenverteilung. Da sie die meisten der o. a. Eigenschaften aufweisen, sind Fällungskieselsäuren und Silicagele die Produkte, die üblicherweise als Mattierungsmittel eingesetzt werden.

Neben dem Vorteil der Reduzierung des Glanzes von Lacken führt die Verwendung von Mattierungsmitteln in Lacken aber auch zu Problemen. So wird in einigen Lacksystemen durch die Zugabe des Mattierungsmittel deren Viskosität unerwünscht erhöht. Wie in EP 0 442 325 beschrieben, sind besonders thixotrope, konventionelle lösemittelhaltige Alkydlacke im Hinblick auf ihre rheologischen Eigenschaften schwierig zu mattieren. Insbesondere trifft dies auf wässrige Lacksysteme auf Acrylat-, Acrylat-Polyurethan oder entsprechende Hybridsysteme zu.

Ein weiteres bei Mattierungsmitteln häufig beobachtetes Problem ist, dass sie zur Sedimentation neigen. Um das Sedimentieren von Mattierungsmitteln in Lacken zu vermeiden, werden die Oberfläche der meisten der handelsüblichen Mattierungsmittel mit einem oberflächenmodifizierenden Agens belegt. Dabei werden organischen Komponenten an die $SiO_2$-Oberfläche angebunden. Diese Anbindung kann sowohl chemischer Natur sein, so dass echte chemische Bindungen zwischen $SiO_2$-Oberfläche und organischer Komponente bestehen, als auch physikalischer Natur sein, d.h. die organische Komponente ist mittels Van-der-Waals-Wechselwirkungen oder Wasserstoffbrückenbindungen an die $SiO_2$-Oberfläche adsorbiert. Die Oberflächenmodifikation bringt jedoch Probleme mit sich. So haben handelsübliche, oberflächenmodifizierte Mattierungsmittel oft den Nachteil, dass sich die Beschichtung bei Lagerung des Lackes ablösen kann und damit der erwünschte Effekt zumindest teilweise wieder zunichte gemacht wird. Dies kann zu Beeinträchtigungen der Lackeigenschaften führen.

In dem Dokument WO200342293 wird ein Mattierungsmittel offenbart, bei dem ein Silicagel mit Wachs belegt wurde. In WO/9951692 wird vorgeschlagen, das Silicagel mit einem Harnstoffurethanderivat zu beschichten.

Durch die Belegung eines Silicagels mit einem Polyol gemäß Patentschrift EP 0 442 325 wird ein Mattierungsmittel hergestellt, dass keinen oder nur geringen Einfluss auf das thixotrope Verhalten von Farben und Lacken, die auf polyamid-modifizierten Alkydharzen basieren, hat.

In der Patentschrift W09837013 wird ein Verfahren beschrieben, bei dem ein Hydrogel mit einem Organosiloxan in Gegenwart einer katalytischen Menge einer starken Säure in Kontakt gebracht wird, so dass das Hydrogel in ein hydrophobiertes Silicagel überführt wird. Als Organosiloxan werden Verbindungen mit der allgemeinen Struktur $R_nSiO_{(4-n)/2}$ mit n = 2-3 eingesetzt.

Aufgabe der vorliegenden Erfindung war es, oberflächenmodifizierte Silicagele bereitzustellen, bei denen zumindest einige der zuvor genannten Nachteile zumindest teilweise behoben sind und die verbesserte anwendungstechnische Eigenschaften zeigen. Ferner soll ein Verfahren bereitgestellt werden, mit dem die erfindungsgemäßen oberflächenmodifizierten Silicagele hergestellt werden können.
Weitere nicht explizit genannte Aufgaben ergeben sich aus dem Gesamtzusammenhang der nachfolgenden Beschreibung und Beispiele.
Überraschend wurde gefunden, dass die Aufgabe durch die in der nachfolgenden Beschreibung sowie den Ansprüchen und den Beispielen näher definierten erfindungsgemäßen oberflächenmodifizierten Silicagele sowie dem in der Beschreibung, den Beispielen und den Ansprüchen näher beschriebenen Verfahren gelöst wird.
Gegenstand der vorliegenden Erfindung sind oberflächenmodifizierte Silicagele, dadurch gekennzeichnet, dass sie die Viskosität eines 2-Komponenten-Referenzlackes, der 10.7 Gew.-% zumindest eines erfindungsgemäß oberflächenmodifizierten Silicagels enthält und der nach Herstellung und Zugabe des oberflächenmodifizierten Silicagels 1 Tag bei 23 °C und 50 % relativer Feuchte (r.F.) gelagert wurde, derart beeinflussen, dass der Thixotropieindex TI 6/60 kleiner gleich 4.5 ist.
Weiterhin Gegenstand der Erfindung sind oberflächenmodifizierte Silicagele, die zusätzlich dadurch gekennzeichnet sind, dass sie die Viskosität des 2-Komponenten-Referenzlacks, enthaltend 10.7 Gew.-% zumindest eines erfindungsgemäß oberflächenmodifizierten Silicagels, der nach Herstellung und Zugabe des oberflächenmodifizierten Silicagels 1 Tag bei 23 °C und 50 % r. F. gelagert wurde, im gering gescherten Zustand auf maximal 1200 mPa*s erhöhen und zudem durch einen oder mehrere der physikalisch-chemischen Parameter:

| | |
|---|---|
| mittlere Partikelgröße $d_{50}$ | 0.5 - 50 µm |
| DBP | 100 - 600 g/100 g |
| BET | 100 - 1000 $m^2/g$ |
| Kohlenstoffgehalt | 0.5 - 20 % |
| Porenvolumen (2 - 50 nm) | > 1.0 ml/g |
| Span | < 1.3 |

gekennzeichnet sein können.
Ebenfalls Gegenstand der vorliegenden Erfindung ist ein Verfahren, mit dem die erfindungsgemäßen oberflächenmodifizierte Silicagele hergestellt werden können, dadurch gekennzeichnet, dass die Oberfläche eines Silicagels mit einem Polymer modifiziert wird.
Gegenstand der Erfindung ist schließlich die Verwendung der erfindungsgemäßen oberflächenmodifizierten Silicagele, insbesondere als Mattierungsmittel in Farben und Lacken.
Die erfindungsgemäßen oberflächenmodifizierten Silicagele weisen unter anderem die folgenden Vorteile gegenüber handelsüblichen Mattierungsmitteln auf $SiO_2$-Basis auf:

- Gegenüber handelsüblichen Mattierungsmitteln auf $SiO_2$-Basis bewirken die erfindungsgemäßen oberflächenmodifizierten Silicagele bei gleicher Mattierungseffizienz einen wesentlich geringeren Anstieg der Viskosität des mattierten Lackes.
- Die erfindungsgemäßen oberflächenmodifizierten Silicagele weisen eine sehr geringe Neigung zur Sedimentation in Lacken auf. Hierin zeigen sie somit deutliche Vorteile gegenüber ähnlichen, mit Wachsen belegten Mattierungsmitteln.
- In einigen Lacksystemen wird durch die erfindungsgemäßen oberflächenmodifizierten Silicagele eine bessere Transparenz im Vergleich zu handelsüblichen Mattierungsmitteln auf $SiO_2$-Basis erzielt.

Die vorliegenden Erfindung wird nachfolgend im Detail beschrieben. Zuvor werden jedoch einige wichtige Begriffe definiert.
Unter dem Begriff Silicagel im Sinne der vorliegenden Erfindung sind anorganische Oxide auf Basis von $SiO_2$ zu verstehen, die über einen Gelprozess hergestellt werden. Silicagele unterteilen sich in die Gruppe der Hydrogele, der Aerogele und der Xerogele. Hydrogele - oder auch Aquagele - werden in Wasser hergestellt, daher sind ihre Poren mit Wasser gefüllt. Ein Xerogel ist ein Hydrogel, aus dem das Wasser entfernt wurde. Ein Aerogel ist ein Xerogel, aus dem die Flüssigkeit so entfernt wurde, dass sich die Struktur des Gels nur minimal verändert und das Porenvolumen weitgehend erhalten bleibt.
Unter Oberflächenmodifizierung ist die chemische und/oder physikalische Anbindung organischer Komponenten an die Oberfläche der Silicagele zu verstehen. D. h. bei oberflächenmodifizierten Silicagelen ist zumindest ein Teil der Oberfläche von zumindest einem Teil der Silicagelpartikel mit dem oberflächenmodifizierenden Mittel belegt.
Gering gescherter Zustand entspricht der dynamischen Viskosität, die mittels eines Haake-Viskosimeters 6R

bei 6 U/min bei Raumtemperatur gemessen wird. Stark gescherter Zustand entspricht der dynamischen Viskosität, die mittels eines Haake-Viskosimeters 6R bei 60 U/min bei Raumtemperatur gemessen wird.

Unter Thixotropieindex ist das Verhältnis der dynamischen Viskosität des 2-Komponenten-Referenzlacks enthaltend 10.7 Gew.-% zumindest eines erfindungsgemäßen oberflächenmodifizierten Silicagele, der nach Herstellung und Zugabe des oberflächenmodifizierten Silicagels 1 Tag bei 23 °C und 50 % r.F. gelagert wurde, im gering gescherten Zustand, zur dynamischen Viskosität des 2-Komponenten-Referenzlacks enthaltend 10.7 Gew.-% zumindest eines der erfindungsgemäßen oberflächenmodifizierten Silicagele, der nach Herstellung und Zugabe des oberflächenmodifizierten Silicagels 1 Tag bei 23 °C und 50 % r.F. gelagert wurde, im stark gescherten Zustand, zu verstehen.

$$TI\ 6/60 = \frac{\textit{dynamische Viskosität bei}\ 6\,U/\mathrm{min}}{\textit{dynamische Viskosität bei}\ 60\,U/\mathrm{min}}$$

Als 2-Komponenten-Referenzlack im Sinne der Erfindung ist ein 2-Kompontenlack, der gemäß der in diesem Patent beschriebenen Lack-Rezeptur 2 hergestellt wird, zu verwenden.

Die erfindungsgemäßen oberflächenmodifizierten Silicagele sind dadurch gekennzeichnet, dass sie die Viskosität eines 2-Komponenten-Referenzlackes, der 10.7 Gew.-% zumindest eines erfindungsgemäßen oberflächenmodifizierten Silicagels enthält und der nach Herstellung und Zugabe des oberflächenmodifizierten Silicagels 1 Tag bei 23 °C und 50 % relativer Feuchte (r. F.) gelagert wurde, derart beeinflussen, dass der Thixotropieindex TI 6/60 kleiner gleich 4.5, bevorzugt kleiner gleich 4.0, insbesondere höchstens 3.8 ist.

Die erfindungsgemäßen oberflächenmodifizierten Silicagele können weiterhin dadurch gekennzeichnet sein, dass sie die Viskosität des 2-Komponenten-Referenzlacks, enthaltend 10.7 Gew.-% von zumindest einem der erfindungsgemäßen oberflächenmodifizierten Silicagele, der nach Herstellung und Zugabe des oberflächenmodifzierten Silicagels 1 Tag bei 23 °C und 50 % r. F. gelagert wurde im gering gescherten Zustand auf maximal 1200 mPa*s, vorzugsweise auf maximal 900 mPa*s, insbesondere auf maximal 700 mPa*s, in einer besonderen Ausführungsform auf maximal 650 mPa*s und in einer ganz besonders bevorzugten Ausführungsform auf maximal 600 mPa*s erhöhen.

Die erfindungsgemäßen oberflächenmodifizierte Silicagele können zudem einen oder mehrere der folgenden physikalisch-chemischen Parameter aufweisen:

| | |
|---|---|
| Mittlere Partikelgröße $d_{50}$ | 0.5 - 50 µm |
| DBP | 100 - 600 g/100g |
| BET-Oberfläche | 100 - 1000 $m^2/g$ |
| Kohlenstoffgehalt | 0.5 - 20 % |
| Mesoporenvolumen (2 - 50 nm) | > 1.0 ml/g |
| Span | < 1.3 |

Insbesondere können sie

- eine mittlere Partikelgröße $d_{50}$ bevorzugt von 1 µm bis 40 µm, besonders bevorzugt von 1 µm bis 20 µm, insbesondere von 2 µm bis 15 µm und/oder
- eine DBP-Aufnahme bevorzugt von 150 bis 500 g/100 g, besonders bevorzugt von 200 bis 500 g/100g, insbesondere von 200 bis 400 g/100 g und 200 bis 300 g/100 g und/oder
- eine BET-Oberfläche bevorzugt von 150 bis 750 $m^2/g$, besonders bevorzugt von 200 bis 500 $m^2/g$ und 200 - 350 $m^2/g$ und/oder
- einen Kohlenstoffgehalt bevorzugt von 0.5 bis 15 %, besonders bevorzugt von 0.5 bis 10 % und insbesondere 1 bis 6 %, 2 bis 6 % und 3 - 5 %,
- ein Mesoporenvolumen (2 -50 nm) bevorzugt von > 1.5 ml/g und/oder
- einen Span von 0.1 - 1.2

aufweisen.

Das Sedimentationsverhalten der erfindungsgemäßen oberflächenmodifizierten Silicagele liegt in der Regel bei 1 bis 2 (Details zur Methode siehe Beispiel 6).

Alle genannten Vorzugsbereiche können unabhängig voneinander eingestellt werden.

Die besonderen Eigenschaften der erfindungsgemäßen Silicagele sind insbesondere auf die zur Oberflächenmodifikation verwendeten Polymere zurückzuführen. Silicagele, die die erfindungsgemäßen Eigenschaften zeigen, weisen bevorzugt eine Oberfläche auf, welche mit einem oder mehreren Polyorganosiloxan(en) oder modifizierten Polyorganosiloxan(en) behandelt wurde. Besonders bevorzugt handelt es sich um mit polyether-, acrylat- und/oder polyacrylatmodifizierten Polyorganosiloxanen oder Polyalkoxysiloxanen behandelte Silicagele.

In einer besonders bevorzugten Ausführungsform der vorliegenden Erfindung weisen die Silicagele eine mit Polyorganosiloxanen der folgenden allgemeinen Struktur:

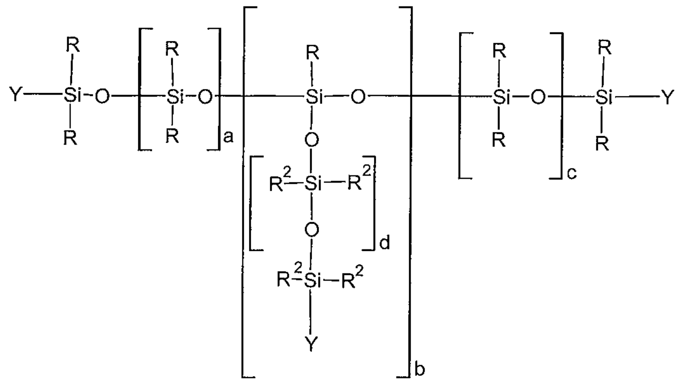

wobei

Y = -OH, -OR oder
Y = $H_5C_2$-O-$(C_2H_4O)_m$-, $H_7C_3$-O-$(C_3H_6O)_m$- oder
Y =

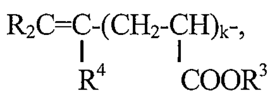

R = -Alkyl insbesondere Methyl oder Ethyl,
$R^2$ = Alkyl oder H,
$R^3$ = Alkyl,
$R^4$ = H oder Alkyl,
a = 0 - 100, b = 0-100, c= 0-100, d = 0-100,
m = 0-100 und k = 0-100 ist,

belegte Oberfläche auf.

In einer weiteren bevorzugten Ausführungsform der vorliegenden Erfindung ist die Oberfläche der Silicagele mit einem Polyorganosiloxan der folgenden allgemeinen Struktur belegt:

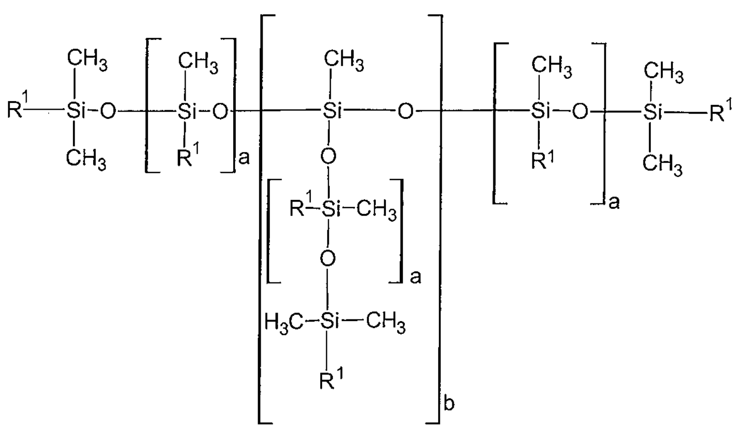

wobei

$R_1$ = ein Methylrest oder

$R_1$ =

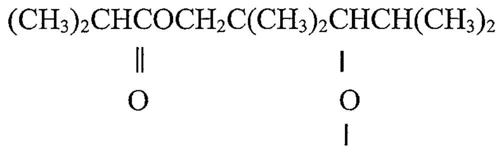

und/oder

$R_1$ =

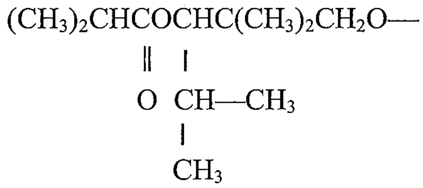

ist und die Summe der Einheiten a = 0 bis 100, die Summe der Einheiten b = 0 bis 15 ist, wobei bei den Resten $R^1$ das Verhältnis von Methyl- zu Alkoxyresten kleiner 50 : 1 ist und b > 1 ist, wenn a = 0 ist und a > 5 ist, wenn b = 0 ist. Nähere Angaben, insbesondere zur Herstellung dieser Polyorganosiloxane sind der DE 36 27 782 A1 zu entnehmen. Der Inhalt dieser Patentanmeldung ist ebenfalls Gegenstand der vorliegenden Anmeldung.

Unter Alkyl-Rest sind gerad- oder verzweigtkettige Alkylreste mit 1 bis 100 C-Atomen, bevorzugt 1 bis 25, besonders bevorzugt 1 bis 10 C-Atomen sowie Cycloalkylreste mit 1 bis 15 C-Atomen zu verstehen. Die Alkylreste können eine oder mehrere Doppel- oder Dreifachbindungen enthalten, einzelne Atome können durch Heteroatome wie O, N oder S ersetzt werden.

Die erfindungsgemäßen oberflächenmodifizierten Silicagele können nach einem Verfahren hergestellt werden, bei dem die Oberfläche des Silicagels mit einem Polymer modifiziert wird.

Die erfindungsgemäßen Verfahren umfassen die folgenden Schritte:

a) Vorvermahlung des Hydrogels
b) Trocknung des Hydrogels zum Xerogel
c) Vermahlung des Xerogels
sowie einen Schritt
d) Oberflächenmodifizierung,

wobei Schritt d) zu verschiedenen Zeitpunkten durchgeführt werden kann.

Im Schritt a) wird ein nach an sich bekannten Verfahren hergestelltes Hydrogel für die weitere Verarbeitung grob vorvermahlen. Für die Vorvermahlung sind alle Arten von Mühlen geeignet, bevorzugt werden Stiftmühlen eingesetzt. Als besonders geeignet für das erfindungsgemäße Verfahren haben sich Hydrogele erwiesen, die einen SiO2-Gehalt von ≥ 5 %, bevorzugt 20 bis 40 %, und eine BET von 200 bis 500 $m^2/g$, bevorzugt von 250 bis 400 $m^2/g$ aufweisen. Solche Hydrogele können z. B. gemäß EP0384226 oder DE 4 132 230 hergestellt werden. Der Inhalt dieser Patentschriften wird ausdrücklich in den Inhalt der vorliegenden Erfindung einbezogen.

In Schritt b) wird das vorvermahlene Hydrogel getrocknet. Für die Anwendung von Silicagelen als Mattierungsmittel hat sich ein hohes Porenvolumen als vorteilhaft erwiesen, da damit geringe Glanzwerte im Lack erreicht werden können. Ein hohes Porenvolumen kann erzielt werden, indem man das Hydrogel einer Kurzzeittrocknung unterzieht. Als geeignete Trocknungsaggregate haben sich z.B. Sprühtrockner, Mahltrockner, Stromtrockner oder Spin-Flash-Trockner erwiesen. Für das erfindungsgemäße Verfahren wird die Trocknung bevorzugt in einem Spin-Flash-Trockner durchgeführt, wobei als Trocknereintrittstemperatur der Bereich 100 - 700°C, bevorzugt 100 - 500°C und besonders bevorzugt 300 - 500 °C gewählt werden.

Durchsatz und Austrittstemperatur werden so eingestellt, dass das resultierende Xerogel eine Restfeuchte von < 15%, bevorzugt < 10% aufweist.

Nach der Trocknung wird das Silicagel in Schritt c) vermahlen. Hierzu sind alle Arten von Mühlen geeignet. Für die für die Anwendung als Mattierungsmittel notwendige Feinteiligkeit des Produkts haben sich Luft- und Dampfstrahlmühlen als besonders geeignet erwiesen. Besonders bevorzugt wird die Vermahlung auf einer Fließbettgegenstrahlmühle durchgeführt.

Zur Vermeidung von Oberkorn oder Stippen ist es zweckmäßig, nach der Trocknung der oberflächenmodifizierten Silicagele in Schritt b) oder nach oder während der Vermahlung in Schritt c) Partikel mit einem Durchmesser

über 50 µm, bevorzugt über 30 µm, insbesondere über 20 µm abzutrennen. Dies kann je nach Feinheit des Mattierungsmittels z.B. durch ein entsprechendes Sieb oder eine Sichtereinrichtung, die auch in die Mühle integriert sein kann, erfolgen.

Die Oberflächenmodifikation in Schritt d) kann vor oder während mindestens einem der Schritte a) bis c) erfolgen. Das Polymer kann dabei unverdünnt als Reinsubstanz oder in verdünnter Form als wässrige Emulsion zugegeben werden.

In einer Ausführungsform I der vorliegenden Erfindung - Schritt d) vor Schritt b) - werden 0.2 bis 12 Gew.-%, vorzugsweise mit 0.5 bis 5% des Polymers bezogen auf das Hydrogel mit dem vorvermahlenen Hydrogel (nach Schritt a)) bei Raumtemperatur intensiv vermischt. Die Zugabe erfolgt so, dass eine homogene Verteilung über das Hydrogel gewährleistet ist. Anschließend wird die Mischung in Schritt b) getrocknet, in Schritt c) vermahlen und ggf. gesiebt oder gesichtet.

In einer Ausführungsform II der vorliegenden Erfindung - Schritt d) vor Schritt c) - wird das in Schritt b) getrocknete Silicagel mit einer Restfeuchte von ≤ 10 % bei Raumtemperatur mit dem Polymeren intensiv vermischt. Die Zugabe des Polymeren erfolgt so, dass eine homogene Verteilung über das Hydrogel gewährleistet ist. Anschließend wird die Mischung in Schritt c) vermahlen und ggf. gesiebt oder gesichtet.

In einer Ausführungsform III der vorliegenden Erfindung - Schritt d) während c) - wird das in Schritt b) getrocknete Silicagel in Schritt c) vermahlen und gleichzeitig die Oberfläche modifiziert. Dazu wird das Polymer so in den Mahlraum der Mühle gefördert, dass sich das gewünschte Belegungsverhältnis einstellen kann.

Die in den Stufen a) - c) je nach Ausführungsform des erfindungsgemäßen Verfahrens eingesetzten, unmodifizierten Silicagelvorstufen können nach bekannten Verfahren hergestellt oder kommerziell erworben werden. Daraus ergibt sich, dass der Oberflächenmodifizierungsschritt d) einerseits als zusätzlicher Schritt in bekannten Verfahren zur Herstellung von Silicagelen integriert werden kann, andererseits aber auch Silicagelvorstufen erworben werden können, welche als Ausgangsmaterial für eine der Verfahrensvarianten I - III verwendet werden können.

Als oberflächenmodifizierende Polymere können im erfindungsgemäßen Verfahren Polyorganosiloxane oder modifizierte Polyorganosiloxane eingesetzt werden. Bei den modifizierten Polyorganosiloxanen handelt es sich insbesondere um polyethermodifizierte und acrylat- bzw. polyacrylatmodifizierte Polyorganosiloxane. Ferner können Polyalkoxysiloxane eingesetzt werden.

In einer besonders bevorzugten Ausführungsform des erfindungsgemäßen Verfahrens werden Polyorganosiloxane mit folgender allgemeiner Struktur verwendet:

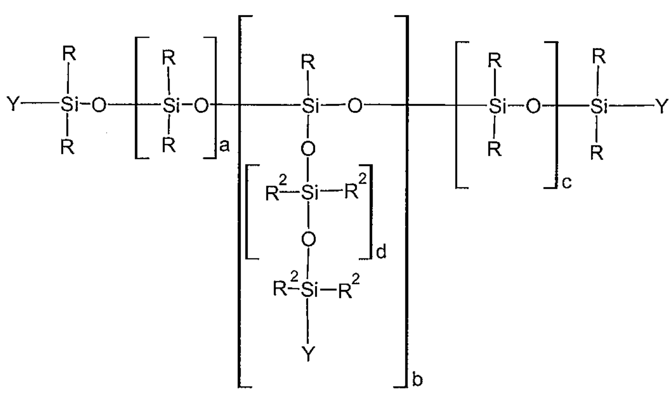

wobei

Y = -OH, -OR oder
Y = $H_5C_2\text{-O-}(C_2H_4O)_m\text{-}$, $H_7C_3\text{-O-}(C_3H_6O)_m\text{-}$ oder
Y =

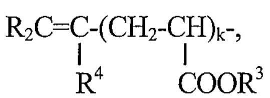

R = -Alkyl insbesondere Methyl oder Ethyl,
$R^2$ = Alkyl oder H,
$R^3$ = Alkyl,

$R^4$ = H oder Alkyl,
a = 0 - 100, b = 0-100, c= 0-100, d = 0-100,
m = 0-100 und k = 0-100 ist.

In einer weiteren bevorzugten Ausführungsform des erfmdungsgemäßen Verfahrens werden Polyorganosiloxane mit folgender allgemeiner Struktur verwendet:

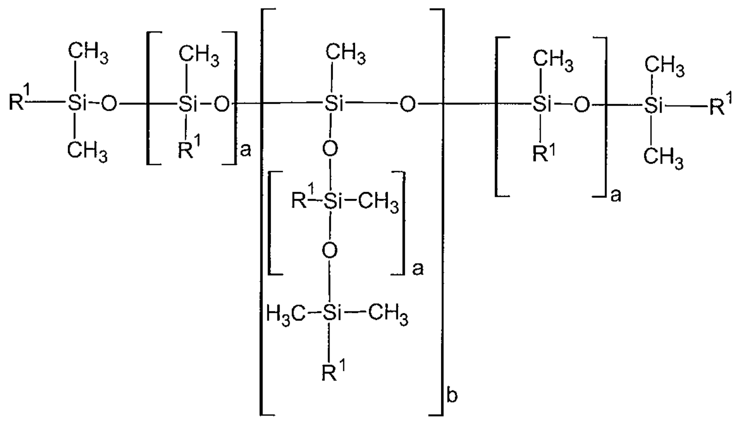

wobei

$R_1$ = ein Methylrest oder
$R_1$ =

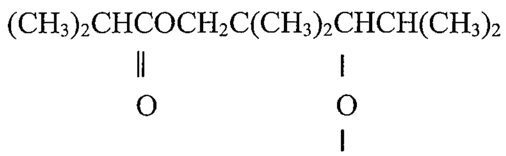

und/oder

$R_1$ =

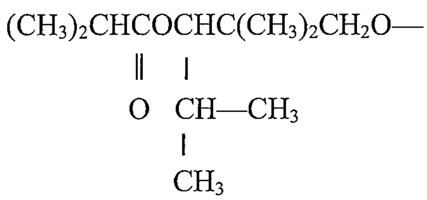

ist und die Summe der Einheiten a = 0 bis 100, die Summe der Einheiten b = 0 bis 15 ist, wobei bei den Resten $R^1$ das Verhältnis von Methyl- zu Alkoxyresten kleiner 50 : 1 ist und b > 1 ist, wenn a = 0 ist und a > 5 ist, wenn b = 0 ist. Nähere Angaben, insbesondere zur Herstellung dieser Polyorganosiloxane sind der DE 36 27 782 A1 zu entnehmen. Der Inhalt dieser Patentanmeldung ist ebenfalls Gegenstand der vorliegenden Anmeldung.

In dem erfindungsgemäßen Verfahren werden Menge und Art des Polymers so gewählt, dass das oberflächenmodifizierte Silicagel die Viskosität des 2-Komponenten-Referenzlacks enthaltend 10.7 Gew.-% des oberflächenmodifizierten Silicagels im gering gescherten Zustand maximal auf 1200 mPa*s , vorzugsweise maximal auf 900 mPa*s, insbesondere maximal auf 700 mPa*s, in einer besonderen Ausführungsform maximal auf 600 mPa*s erhöht.

Die erfindungsgemäßen oberflächenmodifizierten Silicagele werden bevorzugt als Mattierungsmittel in Farben und Lacken verwendet.

Weiterhin können die erfindungsgemäßen oberflächenmodifizierten Silicagele in allen Anwendungsgebieten verwendet werden, in denen üblicherweise Silicagele eingesetzt werden, wie z. B. als Bestandteil von Papierbeschichtungen, als Bestandteil von Entschäumerformulierungen, als Verstärker im Silkonkautschuk, oder in Polymerformulierungen, z.B. als Antiblockingmittel.

Die physikalisch/chemischen Daten der erfindungsgemäßen oberflächenmodifizieren Silicagele werden mit den folgenden Methoden bestimmt:

**Bestimmung der BET-Oberfläche**

Die BET-Oberfläche von Silicagelen wird in Anlehnung an DIN ISO 9277 mittels der Methode der Stickstoffadsorption nach Brunauer, Emmett und Teller (BET) bestimmt. Die Methode basiert auf den Arbeiten von S. Brunauer, P.H. Emmett und E. Teller, J. Am. Chem. Soc., 60, 309 (1938).
Die Messungen erfolgen auf dem Gerät Tristar 3000 (Fa. Micromeritics). Die zu untersuchenden Proben werden vor der Messung so lange unter Vakuum ($p < 10^{-3}$ mbar) bei 160 °C entgast, bis der Druck über der Probe bei geschlossenem Vakuum für 30 Minuten konstant bleibt.

**Bestimmung des Mesoporenvolumens**

Die Bestimmung der Mesoporenverteilung erfolgt nach der Methode nach Barret, Joyner und Halenda (BJH) und basiert auf Arbeiten von E. P. Barret, L. G. Joyner und P. H. Halenda, J. Amer. Chem. Soc., Vol 73, 373, (1951).

Die Messungen erfolgen auf dem Gerät ASAP 2400 (Fa. Micromeritics). Die zu untersuchenden Proben werden vor der Messung so lange unter Vakuum ($p < 10^{-3}$ mbar) bei 200 °C entgast, bis der Druck über der Probe bei geschlossenem Vakuum für 30 Minuten konstant bleibt.

**Bestimmung der Stampfdichte**

Die Bestimmung der Stampfdichte erfolgt in Anlehnung an DIN EN ISO 787-11.
Eine definierte Menge einer zuvor nicht gesiebten Probe wird in einen graduierten Glaszylinder eingefüllt und mittels eines Stampfvolumeters einer festgelegten Anzahl von Stampfungen unterzogen. Während der Stampfung verdichtet sich die Probe. Als Ergebnis der durchgeführten Untersuchung erhält man die Stampfdichte.

Die Messungen werden auf einem Stampfvolumeter mit Zählwerk der Fa. Engelsmann, Ludwigshafen, Typ STAV 2003, durchgeführt.

Zunächst wird ein 250 ml Glaszylinder auf einer Präzisionswaage tariert. Anschließend werden 250 ml Silicagel mit Hilfe eines Pulvertrichters so in den tarierten Messzylinder eingefüllt, dass sich keine Hohlräume bilden. Anschließend wird die Probenmenge auf 0.01 g genau gewogen. Danach wird leicht an den Zylinder geklopft, so dass die Oberfläche des Silicagels im Zylinder waagrecht ist. Der Messzylinder wird in den Messzylinderhalter des Stampfvolumeters eingesetzt und 1250 mal gestampft. Das Volumen der gestampften Probe wird nach einmaligem Stampfdurchgang auf 1 ml genau abgelesen. Die Stampfdichte D(t) berechnet sich wie folgt:

$$D(t) = m * 1000 / V$$

mit:

D(t): Stampfdichte [g/l]
V: Volumen des Silicagels nach dem Stampfen [ml]
m: Masse des Silicagels [g]

**Bestimmung des Trocknungsverlustes**

Die Feuchte oder auch Trocknungsverlust (TV) von Silicagelen wird in Anlehnung an ISO 787-2 nach 2-stündiger Trocknung bei 105 °C bestimmt. Dieser Trocknungsverlust besteht überwiegend aus Wasserfeuchtigkeit.

In ein trockenes Becherglas werden auf einer Präzisionswaage (Satorius LC621S) 10 g des pulverförmigen Silicagels auf 0.1 mg genau eingewogen (Einwaage E). Das Becherglas wird mit Aluminiumfolie abgedeckt, in die mehrere Löcher (Ø 1 mm) gebohrt sind. Das so abgedeckte Becherglas wird 2 h bei 105 °C in einem Trockenschrank getrocknet. Anschließend kühlt das heiße Becherglas in einem Exsikkator über Trockenmittel für mindestens eine Stunde auf Raumtemperatur ab.
Das Becherglas wird zur Bestimmung der Auswaage A auf der Präzisionswaage auf 0.1 mg genau ausgewogen. Man bestimmt die Feuchte (TV) in % gemäß

$$TV = (1 - A / E) * 100,$$

wobei A = Auswaage in g und E = Einwaage in g bedeuten.

**Bestimmung des Glühverlustes**

Nach dieser Methode wird der Gewichtsverlust von Silicagelen in Anlehnung an DIN EN ISO 3262-1 bei 1000 °C bestimmt. Bei dieser Temperatur entweicht physikalisch und chemisch gebundenes Wasser sowie andere flüchtige Bestandteile. Die Feuchte (TV) der untersuchten Probe wird nach der zuvor beschriebenen Methode "Bestimmung des Trocknungsverlusts" in Anlehnung an DIN EN ISO 787-2 ermittelt.
0.5 g Silicagel werden auf 0.1 mg genau in einen vorgeglühten, tarierten Porzellantiegel eingewogen (Einwaage E). Die Probe wird 2 h bei 1000 ± 50 °C in einem Muffelofen erhitzt. Anschließend wird der Porzellantiegel in einem Exsikkatorschrank mit Kieselgel als Trocknungsmittel auf Raumtemperatur abgekühlt. Die Auswaage A wird gravimetrisch bestimmt.
Man erhält den Glühverlust GV in % gemäß

$$GV=(1 - A / F) * 100,$$

wobei F die korrigierte Einwaage bezogen auf getrocknete Substanz in g ist und sich nach

$$F = E * (1 - TV / 100)$$

errechnet.
In den Berechnungen bedeuten A = Auswaage in g, E = Einwaage in g und TV = Trocknungsverlust in %.

**Bestimmung des pH-Werts**

Das Verfahren in Anlehnung an DIN EN ISO 787-9 dient zur Bestimmung des pH-Wertes einer wässrigen Suspension von Silicagel bei 20 °C.
Vor der Durchführung der pH-Messung ist das pH-Messgerät (Fa. Knick, Typ: 766 pH-Meter Calimatic mit Temperaturfühler) und die pH-Elektrode (Einstabmesskette der Fa. Schott, Typ N7680) unter Verwendung der Pufferlösungen bei 20 °C zu kalibrieren. Die Kalibrierungsfunktion ist so zu wählen, dass die zwei verwendeten Pufferlösungen den erwarteten pH-Wert der Probe einschließen (Pufferlösungen mit pH 4.00 und 7.00, pH 7.00 und pH 9.00 und ggf. pH 7.00 und 12.00).
5.00 g pulverförmiges Silicagel mit 4 ± 2 % Feuchtegehalt werden auf einer Präzisionswaage auf 0.01 g genau in eine zuvor tarierte Glas-Weithalsflasche eingewogen. Es wird bis zur 100 ml Markierung mit 20 °C kaltem, entionisiertem Wasser aufgefüllt. Sollten die untersuchten Proben nicht ausreichend wasserbenetzbar sein, so wird bis zur 100 ml-Markierung mit 50.0 ml Methanol p.A. und 50.0 ml entionisiertem Wasser aufgefüllt.
Anschließend wird die Suspension im verschlossenen Gefäß für die Dauer von 5 Minuten mittels einer Schüttelmaschine (Fa. Gerhardt, Modell LS10, 55 W, Stufe 7) bei 20 °C geschüttelt. Die Messung des pH-Wertes erfolgt direkt im Anschluss. Dazu wird die Elektrode zunächst mit entionisierten Wasser, nachfolgend mit einem Teil der Suspension abgespült und anschließend in die Suspension eingetaucht. Nach Zugabe eines Magnetfisches in die Suspension wird bei einer konstanten Rührgeschwindigkeit mit leichter Trombenbildung der Suspension die pH-Messung durchgeführt. Wenn das pH-Meter einen gleichbleibenden Wert anzeigt, wird der pH-Wert an der Anzeige abgelesen.

**Bestimmung der DBP-Zahl**

Die DBP-Aufnahme (DBP-Zahl), die ein Maß für die Saugfähigkeit des Silicagels ist, wird in Anlehnung an die Norm DIN 53601 wie folgt bestimmt:
12.50 g pulverförmiges Silicagel (Feuchtegehalt 4 ± 2 %) werden in die Kneterkammer (Artikel Nummer 279061) des Brabender-Absorptometer "E" gegeben (ohne Dämpfung des Ausgangsfilters des Drehmomentaufnehmers). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird.

Bei einer Anzeige von 600 digits (Drehmoment von 0.6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.

Die DBP-Aufnahme wird in g/100g angegeben und anhand der folgenden Formel berechnet:

$$DBP = \frac{V*D * 100}{E} * \frac{g}{100g} + K$$

mit

DBP = DBP-Aufnahme in g/100g
V = Verbrauch an DBP in ml
D = Dichte von DBP in g/ml (1 ,047 g/ml bei 20 °C)
E = Einwaage an Silicagel in g
K = Korrekturwert gemäß Tabelle 1 (Feuchtekorrekturtabelle) in g/100g

Die DBP-Aufnahme ist für wasserfreies, getrocknetes Silicagel definiert. Bei Verwendung von feuchten Silicagelen ist der Korrekturwert K für die Berechnung der DBP-Aufnahme zu berücksichtigen. Dieser Wert kann anhand der Tabelle 1 ermittelt werden, z. B. würde ein Wassergehalt des Silicagels von 5.8 % einen Zuschlag von 33 g/100 g für die DBP-Aufnahme bedeuten. Die Feuchte des Silicagels wird gemäß der beschriebenen Methode "Bestimmung des Trocknungsverlusts" ermittelt.

Tabelle 1: Feuchtekorrekturtabelle für Dibutylphthalataufnahme -wasserfrei-

| | .% Wasser | | | | |
|---|---|---|---|---|---|
| % Wasser | .0 | .2 | .4 | .6 | .8 |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

### Bestimmung der Leitfähigkeit

Die Bestimmung der elektrischen Leitfähigkeit (LF) von Silicagelen wird in wässriger Suspension in Anlehnung an DIN EN ISO 787-14 durchgeführt.

In ein tariertes 150 ml Becherglas werden 4.00 g pulverförmiges Silicagel (4 ± 2% Feuchtegehalt) mit einer Präzisionswaage (Satorius Universal) auf 0.01 g genau eingewogen, in 80 ml entionisiertem Wasser suspendiert, unter

Rühren auf 100°C erhitzt und 1 min bei 100 °C aufgekocht. Die heiße Suspension wird in einen 100 ml Meßkolben überführt und in einem Wasserbad auf 20 °C abgekühlt. Die Suspension wird mit 20 °C kaltem VE-Wasser im geeichten Messkolben auf 100 ml aufgefüllt und durch Umschütteln homogenisiert.
Die Suspension wird in ein 150 ml Becherglas umgefüllt und ausreichend gerührt, um Sedimentation zu vermeiden.

Die Messzelle des Leitfähigkeitsmessgeräts LF 530 (Fa. WTW) wird mit einer kleinen Probenmenge gespült, bevor die Messzelle LTA01 in die Suspension getaucht wird. Der am Display angezeigte Wert entspricht der Leitfähigkeit bei 20 °C, da der externe Temperaturfühler TFK 530 eine automatische Temperaturkompensation durchführt. Dieser Temperaturkoeffizient als auch die Zellenkonstante k sind vor jeder Messreihe zu überprüfen. Als Kalibrierlösung wird 0.01 mol/l Kaliumchlorid-Lösung verwendet (LF bei 20 °C = 1278 µS/cm).

**Bestimmung der Partikelgröße**

Die Anwendung der Laserbeugung zur Bestimmung von Teilchengrößen basiert auf der Erscheinung, dass Teilchen monochromatisches Licht mit unterschiedlichem Intensitätsmuster in alle Richtungen streuen. Diese Streuung ist abhängig von der Teilchengröße. Je kleiner die Teilchen, desto größer sind die Streuungswinkel.

Die Probenvorbereitung und Messung (Spülen des Moduls, etc.) erfolgt im Fall hydrophiler Silicagele mit VE Wasser, im Fall nicht ausreichend mit Wasser benetzbarer Silicagele mit reinem Ethanol.

In ein 100 ml Becherglas mit 50 ml VE Wasser bzw. 50 ml Ethanol werden 4 ml der homogenen pulverförmigen Silicagelprobe (Restfeuchte 4 ± 2 %) mit einem Spatel eingerührt. Die Suspension wird im Becherglas mit einem Ultraschallfinger (Bandelin, Typ UW 2200 mit Hörn DH 13 G mit Diamantteller Ø 13 mm) für 120 s behandelt. Dazu wird an dem Netzteil des Ultraschallfingers (Bandelin, Sonoplus HD2200) 100 % Power eingestellt. Der Ultraschallfinger tauch dabei 1 cm tief in die Suspension ein. Die Suspension wird sofort danach auf einem Magnetrührer (IKA Labortechnik, Mini MR Standard, 0-1500U/min) bei 750 U/min (50 % Rührerleistung) gerührt. Die Rührdauer vor der ersten Probenahme beträgt mindestens 30 s. Eine Probenahme aus der Suspension erfolgt immer, während die Suspension gerührt wird.
Vor Beginn der Messung lässt man das Laserbeugungsgerät LS 230 (Fa. Coulter) und das Flüssigkeitsmodul (Small Volume Module Plus, 120ml, Fa. Coulter) 2 h warmlaufen und spült das Modul dreimal mit VE Wasser, bei nicht ausreichend mit Wasser benetzbaren Silicagelen dreimal mit Ethanol. Eine Offsetmessung und eine Justierung erfolgt vom Gerät automatisch jede Stunde.

In der Steuerleiste der Gerätesoftware wählt man über dem Menüpunkt "Messung" das Dateifenster "Opt. Modell berechnen" aus und legt die Brechungsindizes in einer rfd-Datei fest: Flüssigkeitsbrechungsindex B. 1. Real = 1.333; Material Brechungsindex Real = 1.46; Imaginär = 0.1.

Messungen mit PIDS werden durchgeführt, wenn die zu erwartende Partikelgrößenverteilung im Submikronbereich liegt. Die Pumpengeschwindigkeit wird am Gerät auf 30 eingestellt.

Grundsätzlich wird vor jeder Messung automatisch eine Hintergrundmessung durchgeführt. Eine Einwegpipette wird vor jeder Probennahme mit der Suspension dreimal gespült. Etwa 2 ml der Suspension werden mit der Pipette entnommen und 1 - 3 Tropfen sofort in das Flüssigkeitsmodul des Gerätes eindosiert. Der Rest in der Einwegpipette wird in das Becherglas zurückgegeben. Nach der Zugabe wird gewartet, bis das Coultergerät eine konstante Konzentration anzeigt. Bei einer Messung mit PIDS wird auf diese Weise mit Hilfe der Pipette solange Suspension zugefügt, bis eine Lichtabsorption von 45 - 55% erreicht ist und das Gerät "OK" meldet. Bei einer Messung ohne PIDS wird solange Suspension zugefügt, bis eine Lichtabsorption von 8 bis 12% erreicht ist und das Gerät "OK" meldet. Die Messung erfolgt bei Raumtemperatur mit dem Auswertemodell der oben festgelegten .rfd-Datei. Von jeder Silicagelprobe werden drei Bestimmungen von jeweils 60 Sekunden mit einer Wartezeit von 0 Sekunden durchgeführt.

Aus der Rohdatenkurve berechnet die Software auf Basis der Volumenverteilung unter Berücksichtigung der Mie-Theorie und den optischen Modellparametern (.rfd Datei) die Teilchengrößenverteilung, aus der z.B. die Partikelgrößen $d_{05}$, $d_{50}$, $d_{95}$ abgelesen werden können. Aus diesen Größen kann als Maß für die Breite der Partikelverteilung der Span folgendermaßen errechnet werden:

$$\text{Span} = (d_{95} - d_{05}) / d_{50}, \text{ wobei } d_{95} > d_{05} \text{ ist.}$$

**Bestimmung des Kohlenstoffgehalts**

Die Bestimmung des Kohlenstoffgehaltes an Silicagelen erfolgt mit dem "C-mat 500" (Fa. Ströhlein Instruments). Die Proben werden bei ca. 1350 °C getempert und der Kohlenstoff durch einen Sauerstoffstrom zu $CO_2$ oxidiert. Das $CO_2$ wird in einer Infrarotzelle gemessen.

Bei den Messungen wird unterschieden, ob der Kohlenstoffgehalt größer oder kleiner als 1 Prozent beträgt. Liegt der Kohlenstoffgehalt der homogenen Kieselsäureproben oberhalb 1 Prozent, wird im "High"-Bereich des Gerätes

gemessen, liegt er unterhalb von 1 Prozent, wird im "Low"-Bereich gemessen.

Zuerst wird die Kontrollprobe gemessen. Dazu werden auf ein ausgeglühtes, auf Raumtemperatur abgekühltes Porzellanschiffchen 0.14-0.18 g der Kontrollprobe auf einer Analysenwaage eingewogen. Beim Bedienen der Starttaste wird das Gewicht übernommen, da die Waage mit dem "C-mat" gekoppelt ist. Das Schiffchen muss innerhalb 30 Sekunden in die Mitte des Verbrennungsrohres geschoben werden. Nach Abschluss der Verbrennung wird der Messwert in Impulse umgewandelt und vom Rechner ausgewertet. Es werden mindestens 3 Bestimmungen (je nach Übereinstimmung) durchgeführt. Eventuell muss der Faktor des Gerätes neu eingestellt werden (Details siehe Bedienungsanleitung "C-mat 500", Firma Ströhlein Instruments). Dieser Faktor wird nach folgender Formel berechnet:

$$Faktor = \frac{Sollwert(Standard) * Einwaage(Standard)\ in\ g * 10^{8}}{Impulse}$$

Anschließend werden die Silicagelproben gemessen. Die Einwaage beträgt 0.04 - 0.05 g. Das Porzellanschiffchen wird mit einem Porzellandeckel abgedeckt. Bei Abweichungen > 0.005 % werden mehr Messungen durchgeführt und der Durchschnitt errechnet.

Die Handhabung des "C-mat 500" wird der Bedienungsanleitung der Firma Ströhlein Instruments entnommen.

Der Kohlenstoffgehalt wird wie folgt berechnet und in der Einheit % angegeben:

$$\text{Kohlenstoffgehalt} = (1 * F * 10^{-8}) / E$$

1 = Impuls
F = Faktor
E = Einwaage in g

**Bestimmung der Auslaufzeit**

Die Bestimmung der Auslaufzeit von Anstrichstoffen und ähnlichen Flüssigkeiten dient dazu, eine Kennzahl zu erhalten, mit der das Fliessen solcher Stoffe einfach und für Betriebszwecke ausreichend beurteilt werden kann. Als Auslaufzeit wird die Zeit bezeichnet, die ein festgelegtes Volumen eines flüssigen Mediums benötigt, vollständig aus einem genormten Auslauf-Becher zu fließen.

Die Temperatur des Lackes und des DIN-Bechers (Ø Auslaufdüse = 4 mm) muss vor und beim Messen der Auslaufzeit 23°C ± 0,5°C betragen. Der DIN-Becher (Ø Auslaufdüse = 4 mm) wird an dem Stativ so befestigt, dass seine Oberkante waagerecht ausgerichtet ist. Die Auslaufdüse wird mit einem Finger verschlossen, und der von Blasen und Verunreinigungen freie Lack wird so in den DIN-Becher (Ø Auslaufdüse = 4 mm) gefüllt, dass die Flüssigkeit über die Innenkante des Becherrandes läuft. Beim Füllen dürfen keine Luftblasen in die Probe gelangen. Dann wird mit einer Glasplatte oder einem Kartenblatt über den Rand überstehender Lack abgestrichen.

Gleichzeitig mit der Freigabe der unteren Öffnung der Auslaufdüse beginnt die Messung der Auslaufzeit; sie wird beendet, sobald der Flüssigkeitsfaden unter der Auslaufdüse zum ersten Mal abreißt.
Die Auslaufzeit wird mit einer Genauigkeit von 1 sec angegeben.

**Bestimmung des Einbrennrückstands**

Diese Methode legt ein in der Praxis erprobtes Verfahren zur Bestimmung des Gehaltes an nicht-flüchtigen Anteilen (abgekürzt: nfA) von Harzen, Harzlösungen und Anstrichstoffen bei erhöhter Temperatur fest. Bedingt durch Lösemittelretention, thermische Abspaltung, Verdunstung niedermolekularer Anteile und Abmessung des Prüfbehälters werden nach diesem Verfahren relative Werte und nicht die wirklichen Gehalte ermittelt. Daher dienen die nach dieser Norm erhaltenen Ergebnisse vorwiegend zur Prüfung auf Qualitätskonstanz.

Es wird mindestens eine Doppelbestimmung durchgeführt. 0.9 - 1.1g der Probe wird mit einer Genauigkeit von ± 0.001 g in die tarierte Schale eingewogen und gleichmäßig verteilt. Nach einer Ablüftzeit von 10 bis 15 Minuten bei Raumtemperatur wird die Schale für 2 h in den auf 120°C eingestellten Lackumlufttrockenschrank gebracht. Nach der Prüfzeit im Lackumlufttrockenschrank wird die Schale in dem Exsikkator auf Raumtemperatur abgekühlt. Der Rückstand wird auf 0.001 g gewogen.

Der Gehalt an nichtflüchtigen Anteilen in % (nfA) wird nach folgender Gleichung berechnet:

$$nfA = 100 * \frac{m_3 - m_1}{m_2 - m_1}$$

Es bedeuten:

$m_1$ = Masse der Schale
$m_2$ = Masse der Schale und der eingewogenen Probe
$m_3$ = Masse der Schale und der getrockneten Probe

Bei Differenzen > 0.5 % nfA (absolut) ist die Bestimmung zu wiederholen.

**Bestimmung der Schichtdicke**

Der Reflektometerwert von mattierten Lacken wird u.a. von der Schichtdicke der Beschichtung beeinflusst. Die exakte Kontrolle der Dicke der getrockneten Lackschicht ist somit erforderlich.

Die nachfolgende Arbeitsvorschrift gilt nur zur Messung von einschichtigen Lackfilmen auf Glassubstraten. Vor der Durchführung der Messung ist die Sonde des Ultraschall-Schichtdickenmessgerätes (QuintSonic, Fa. Elektro Physik) gemäß der Betriebsanleitung des Gerätes zu kalibrieren. Nach Auftragen von ausreichend Koppelmittel auf die Sondenmessfläche wird die Sonde senkrecht auf die Oberfläche der Beschichtung aufgesetzt und die Messung durch Drücken des Sondentaster starten. Nach kurzer Zeit wird der Messwert angezeigt. Die Sonde wird von der Messfläche abgehoben.

Es werden mind. 5 Messungen an Messstellen, die gleichmäßig auf dem zu messenden Objekt verteilt sind, durchgeführt. Es ist darauf zu achten, dass die Messstellen keine Schädigungen, wie Krater, Einschlüsse, Kratzer, Luftblasen etc., oder Verschmutzungen aufweisen.
Aus den ermittelten Messdaten ist ein Mittelwert zu bilden und auf 1 µm genau zu runden.

**Bestimmung des 60°- und 85°-Reflektometerwerts**

Die Beeinflussung des Reflektionsvermögens durch gezielte Aufrauhung von Lackfilmoberflächen ist die herausragende Eigenschaft von Mattierungsmitteln auf Basis von $SiO_2$. Der Reflektometerwert ist somit ein wichtiges Kriterium zur Charakterisierung von mattierten Lackfilmen.

Voraussetzung für die Messung ist, dass die zu messenden Lackfilmoberflächen plan, sauber und ausgehärtet sind.

Die Messung ist an mindestens 3 repräsentativen Stellen der Probe mittels eines Reflektometers mit Messgeometrie nach DIN 67530 (z.B. Haze-gloss, BYK-Instruments) durchzuführen. Werden zu große Abweichungen der Einzelmessungen erzielt, sollte in der Regel eine erneute Messung an repräsentativen Stellen erfolgen oder die Anzahl der Einzelmessungen auf > 3 erhöht werden. Am BYK haze-gloss wird im Display die Standardabweichung der Messungen angezeigt. Ist die Standard-abweichung s > 0.5, ist die Durchführung der o.g. Maßnahmen zu empfehlen. Der Mittelwert ist auf 1 Dezimalstelle anzugeben.

Bei der Charakterisierung von mattierten Lackfilmoberflächen hat es sich bewährt, mit der 60°- und der 85°-Messgeometrie zu messen. In der Abweichung von DIN 67530 werden deshalb die Reflektometerwerte mattierter Lackfilmoberflächen mit beiden Messgeometrien bestimmt.

**Bestimmung der Density (Gelbfilter)**

Beim Einsatz von Mattierungsmitteln in transparenten Lacken kann in Abhängigkeit von eingesetztem Mattierungsmittel und Bindemittelsystem ein mehr oder weniger ausgeprägter Schleier auftreten, der dem transparenten Lackfilm einen bläulichen Unterton verleiht. Deshalb wird dieser Effekt auch Blauschleier genannt. Die analytischen Prüfdaten der Mattierungsmittel lassen keine Rückschlüsse auf diesen Effekt zu. Mit einem Densitometer lässt sich dieser Effekt an entsprechend präparierten Mattlacken reproduzierbar messtechnisch erfassen.

Nach Kalibrierung wird das Filterrad des Densitometers Macbeth RD-918 auf Position "gelb" eingestellt. Anschließend werden mind. 5 Messungen durchgeführt. Es ist darauf zu achten, daß die Meßstellen keine Schädigungen, wie Krater, Einschlüsse, Kratzer, Luftblasen etc. aufweisen. Die größte zulässige Abweichung zwischen dem niedrigsten und höchsten Wert darf D = 0.05 betragen.

Aus den ermittelten Messdaten ist ein Mittelwert zu bilden. Überschreiten die Abweichung zwischen niedrigstem und höchstem Wert die Differenz D = 0.05 sind zusätzlich zum Mittelwert die einzelnen Messwerte zu notieren. Das Ergebnis wird mit 2 Dezimalstellen angegeben.

**Beispiele**

Die folgende Beispiele sollen die Erfindung näher erläutern, ohne ihren Umfang zu beschränken.

**Vergleichsbeispiel V1**

a) Herstellung des Hydrogels

Aus Wasserglas (Cognis Natronwasserglas 37/40 filtriert) und 45 %-iger Schwefelsäure wird ein Silicagel hergestellt.

Dazu werden 45 Gew.-%ige Schwefelsäure und Natronwasserglas intensiv so vermischt, dass sich ein Reaktandenverhältnis entsprechend einem Überschuss an Säure (0.25 N) und einer $SiO_2$-Konzentration von 18.5 Gew.-% einstellt. Das dabei entstandene Hydrogel wird 12 h gelagert und dann auf eine Partikelgröße von ca. 1 cm gebrochen.

Es wird mit entionisiertem Wasser gewaschen, bis die Leitfähigkeit des Waschwassers unterhalb 5 mS/cm liegt. Danach wird unter Ammoniakzugabe bei pH 9 und 80 °C für 10 - 12 Stunden gealtert, und dann mit 45 Gew.-%iger Schwefelsäure auf pH 3 eingestellt. Das Hydrogel hat dann einen Feststoffgehalt von 34 - 35 %. Anschließend wird es auf einer Stiftmühle (Alpine Typ 160Z) auf eine Partikelgröße von ca. 150 µm grob vermahlen. Das Produkt hat nach Trocknung im Laborofen (3 h, 160 C°) eine BET-Oberfläche von 320 - 340 $m^2$/g.

b) Herstellung des Xerogels:

Das vorvermahlene Hydrogel wird mittels Spinflash-Trockners (Anhydro A/S, APV, Typ SFD47, $T_{ein}$ = 350 °C, $T_{aus}$ = 130 °C) so getrocknet, dass es nach der Trocknung eine Endfeuchte von ca. 2 % und eine BET-Oberfläche von ca. 330 $m^2$/g aufweist. Anschließend wird es auf einer Fließbettgegenstrahlmühle (Alpine, AFG 100) auf eine mittlere Partikelgröße ($d_{50}$) von 6.7 µm vermahlen.

Die physikalisch-chemischen Daten des Vergleichsbeispiels 1 finden sich in Tabelle 2.

**Beispiel 1**

7 kg des Hydrogels aus Vergleichsbeispiel 1a) (entsprechend 2.45 kg $SiO_2$) werden in einem Eirich-Mischer (Typ RO2, Betrieb auf Stufe 1) bei Raumtemperatur mit 0.245 kg der Emulsion eines Alkoximethyl-Polysiloxans (Foamex 1435, Fa. Tego GmbH; Produktdatenblatt von Mai 1999) im Gewichtsverhältnis 28.6 : 1 (Hydrogel : Emulsion des Alkoximethyl-Polysiloxans) versetzt. Die Alkoximethyl-Polysiloxan-Emulsion wird innerhalb von 3 min zum Hydrogel zugegeben und 7 min nachvermischt. Die resultierende Mischung wird nach 2 h Standzeit mittels Spinflash-Trockners (Anhydro A/S, APV, Typ SFD47 , $T_{ein}$ = 350 °C, $T_{aus}$ = 120 °C) getrocknet und auf einer Fließbettgegenstrahlmühle (Alpine, AFG 100) auf eine mittlere Partikelgröße $d_{50}$ von 6.7 µm vermahlen.

Die physikalisch-chemischen Daten des Beispiels 1 finden sich in Tabelle 2.

**Beispiel 2**

Analog zu Beispiel 1 wird ein oberflächenmodifiziertes Silicagel hergestellt, wobei das Hydrogel mit der Alkoximethyl-Polysiloxan-Emulsion im Gewichtsverhältnis 11.4 : 1 vermischt wird.

Die physikalisch-chemischen Daten des Beispiels 2 finden sich in Tabelle 2.

**Beispiel 3**

Analog zu Beispiel 1 wird ein oberflächenmodifiziertes Silicagel hergestellt, wobei das Hydrogel mit der Alkoximethyl-Polysiloxan-Emulsion im Gewichtsverhältnis 5.7 : 1 vermischt wird.

Die physikalisch-chemischen Daten des Beispiels 3 finden sich in Tabelle 2.

**Vergleichsbeispiel V2:** Acematt OK 520 (Degussa AG)
**Vergleichsbeispiel V3:** Syloid ED 30 (Grace GmbH & Co. KG)
**Vergleichsbeispiel V4:** Syloid C 906 (Grace GmbH & Co. KG)

Tabelle 2:

| Beispiel | | 1 | 2 | 3 | V1 | V2 | V3 | V4 |
|---|---|---|---|---|---|---|---|---|
| organisch modifiziert | | ja | ja | ja | Nein | ja | ja | ja |
| BET-Oberfläche (Singlepoint) | $m^2/g$ | 302 | 275 | 239 | 330 | 207 | 306 | 254 |
| Mesoporenvolumen (2-50 nm) | ml/g | 1.82 | 1.78 | 1.65 | 1.91 | 0.44 1) | 1.48 | 1.51 1) |
| Stampfdichte | g/l | 110 | 117 | 125 | 105 | 79 | n.b. | 127 |
| Kohlenstoffgehalt | % | 0.85 | 2.10 | 3.80 | 0.02 | 3.78 | 7.00 | 7.40 |
| Trocknungsverlust | % | 3.0 | 2.5 | 1.9 | 1.9 | 5.3 | 0.9 | 4.5 |
| Glühverlust | % | 4.8 | 5.7 | 7.2 | 3.8 | 9.3 | n.b. | 12.0 |
| pH | | 3.1 | 3.1 | 3.1 | 2.9 | 6.1 | n.b. | 3.4 |
| Leitfähigkeit | µS/cm | 500 | 480 | 450 | 648 | 280 | n.b. | 164 |
| DBP (wasserfrei) | g/100g | 262 | 255 | 235 | 278 | 334 | n.b. | 257 |
| $d_{05}$ | µm | 2.9 | 2.9 | 2.8 | 3.0 | 2.0 | 2.0 | 1.9 |
| $d_{50}$ | µm | 6.7 | 6.8 | 6.7 | 6.7 | 6.3 | 5.7 | 6.4 |
| $d_{95}$ | µm | 10.5 | 10.8 | 10.8 | 11.0 | 14.0 | 10.1 | 15.7 |
| Span | | 1.134 | 1.162 | 1.194 | 1.194 | 1.905 | 1.421 | 2.156 |

1) Mesoporenvolumen (2-30 nm)
n.b. = nicht bestimmt

**Beispiel 4:**

**Test der lacktechnische Eigenschaften der erfindungsgemäßen Silicagele in einem Coil-Coating-Lack**

**Geräte**

- Kugelmühle KU 5 mit Drehgestell
- Präzisionswaage Laborflügelrührer Grindometerblock 0-25 µm, 0-50 µm, 0 -100 µm Auslaufbecher DIN 53211 (4mm)
- Spiralrakel 80 µm
- Aluminium - Bonder - Bleche 722 W OF
- Phosphatierte Stahlbleche QUV R-36-I
- Umluft-Lacktrockenofen mit Coil-Coating Einschub
- Umluft-Lacktrockenschrank
- Schichtdickenmessgerät
- Glanzmessgerät (Reflektometer) DIN 67530

**Arbeitsvorschrift**

**Lack-Rezeptur 1**

| Pos. | Lackrohstoff | Gewichts- anteil in % |
|---|---|---|
| 1 | Dynapol LH 831 70% in Solv. 150 / BG (Fa. Degussa AG, Lieferprogramm v. 07/2002) | 35.0 |
| 2 | Butylglykol | 6.8 |
| 3 | Titandioxid Kronos 2310 (Fa. Kronos, Produktdatenblatt 2.2 v. 2000) | 29.7 |
| 4 | AEROSIL R972 (Fa. Degussa AG, Produktinformation aus Internet v. 23.03.2004) | 0.2 |
| 5 | Dynapol LH 831 70% in Solv. 150 / BG | 7.8 |
| 6 | Cymel 303 (Fa. Cytec Ind. Inc., Produktdatenblatt v. 02/2003) | 7.3 |
| 7 | Solvesso 100 (Fa. ExxonMobil Chemical, Produktdatenblatt v. 07/2003) | 7.0 |
| 8 | Butyldiglykol | 3.7 |
| 9 | Disparton L1984 50% in Solvesso 200 S (Fa. Kusumoto Chemicals Ltd., Produktdatenblatt v. 01/1998) | 1.5 |
| 10 | BYK Catalyst 450 (Fa. Byk Chemie, Produktinformation v. 06/2006) | 0.2 |
| 11 | Dynapol Catalyst BL1203 (Fa. Degussa AG, Sicherheitsdatenblatt v. 11.03.2004) | 0.8 |
| | **Summe** | **100.0** |

Die Lackrohstoffe der Pos. 1 - 4 werden 48 h in einer Kugelmühle KU 5, beladen mit 4900 g Alubitkugeln, bei 60 U/min dispergiert. Anschließend werden die Lackrohstoffe der Pos. 5 - 11 zugegeben und 30 min ebenfalls bei 60 U/min gemischt. Die Beladung der Kugelmühle ist so gewählt, dass eine Gesamtmenge von 5000 g an Lackrohstoffen verarbeitet werden kann. Von dem so hergestellten weiß glänzenden Coil-Coating-Lack werden der Grindometerwert (Sollwert < 12 µm), der Einbrennrückstand (Sollwert ca. 67.5 %) und die Auslaufzeit (Sollwert ca. 40 s) bestimmt. Zur Prüfung des 20°-Reflektometerwertes wird der unmattierte Lack mit einem 80 µm Spiralrakel auf phosphatierte Stahlbleche Typ QUV R-36-I appliziert und nach einer Ablüftzeit von 30 s bei einer Objekteinbrenntemperatur von 235 °C für Dauer von 90 s eingebrannt. Bei einer Schichtdicke von ca. 22 µm sollte der 20°-Reflektometerwert bei 75 ± 5 liegen.

Vor jedem Gebrauch des Lackes ist dieser 10 min am Dissolver bei 1000 U/min aufzurühren. Auf 150 Gew. -Teile des unmattierten Coil-Coating-Lacks wird Fällungskieselsäure bzw. Silicagel entsprechend Tabelle 3 in einen 350 ml-Polyethylenbecher eingewogen. Die Fällungskieselsäure bzw. das Silicagel wird sorgfältig mit einem Spatel in den Prüflack eingearbeitet. Im Anschluss daran wird 10 min mit einem Flügelrührer (Durchmesser 43 mm) bei 2000 U/min dispergiert, wobei der PE-Becher zur Vermeidung von Verdunstungsverlusten abgedeckt ist. Nach Einarbeitung des Mattierungsmittels wird der mattierte Lack im verschlossenen Becher zum Entlüften 30 min stehen lassen. Danach werden Grindometerwert und Auslaufzeit bestimmt.

Der mattierte Lack wird mit einem 80 µm Spiralrakel auf phosphatierte Stahlbleche Typ R-36-I appliziert. Nach einer Ablüftzeit von 30 Sekunden wird der Lack 90 Sekunden bei 235°C Objekttemperatur eingebrannt. Danach werden Schichtdicke des Lacks, 60°- und 85°-Reflektometerwert bestimmt und der Sheen (= 85°-Reflektometerwert - 60°-Reflektometerwert) errechnet (siehe Tabelle 3).

Die Daten in Tabelle 3 zeigen, dass die Mattierungseffizienz der erfindungsgemäßen oberflächenmodifizierten Silicagele in diesem Lacksystem vergleichbar ist mit der der Vergleichsbeispiele, d. h. die erfindungsgemäße Oberflächenmodifzierung führt nicht zu einer Verschlechterung der Mattierungseffizienz.

Tabelle 3:

| **Coil-Coating-Lack** | | | | | |
|---|---|---|---|---|---|
| **Silicagel/ Kieselsäure aus Beispiel** | **Einwaage** | **Schichtdicke** | **60°-Reflektometerwert** | **85°-Reflektometerwert** | **Sheen** |
| | [g] | [µm] | [%] | [%] | [%] |
| 1 | 6.0 | 24 | 29.1 | 71.4 | 42.3 |

Tabelle 3: (fortgesetzt)

| Coil-Coating-Lack | | | | | |
|---|---|---|---|---|---|
| **Silicagel/ Kieselsäure aus Beispiel** | **Einwaage** | **Schichtdicke** | **60°-Reflektometerwert** | **85°-Reflektometerwert** | **Sheen** |
| | [g] | [µm] | [%] | [%] | [%] |
| 2 | 6.1 | 23 | 29.9 | 71.4 | 41.5 |
| 3 | 6.8 | 23 | 30.2 | 72.0 | 41.8 |
| V 1 | 6.0 | 23 | 30.0 | 70.3 | 40.3 |
| V 2 | 5.4 | 24 | 29.3 | 72.5 | 43.2 |
| V 3 | 7.4 | 24 | 30.0 | 76.1 | 46.1 |
| V 4 | 6.4 | 24 | 30.1 | 71.7 | 41.6 |

**Beispiel 5:**

**Lacktechnische Eigenschaften in einem 2-Komponenten-Lack**

Beim Einsatz von Mattierungsmitteln in transparenten Lacken kann in Abhängigkeit von eingesetztem Mattierungsmittel und Bindemittelsystem ein mehr oder weniger ausgeprägter Schleier auftreten, der dem transparenten Lackfilm einen bläulichen Unterton verleiht. Deshalb wird dieser Effekt auch Blauschleier genannt. Die analytischen Prüfdaten der Mattierungsmittel lassen keine Rückschlüsse auf diesen Effekt zu. Mit einem Farbmessgerät z.B. einem Densitometer lässt sich dieser Effekt an entsprechend präparierten Mattlacken reproduzierbar messtechnisch erfassen.

Durch die Applikation von mattierten 2K-PUR-Lacken auf schwarze Glasscheiben wird je nach Ausprägung des Schleiers die Farbtiefe der schwarzen Glasscheibe gemindert. Über die Messung der Density = Farbtiefe durch die Lackschicht kann indirekt eine Aussage über die Ausprägung des Schleiers und damit auch über die Transparenz des Lackes getroffen werden.

**Geräte**

- Laborflügelrührer
- Auslaufbecher nach DIN 53211, 4 mm
- Filmziehgerät, z.B. Coatmaster 509 MC, Fa. Erichsen
- Filmziehrakel 150 µm
- Lack-Umluft-Trockenschrank
- Schichtdickenmeßgerät z.B. Quintsonic PRO, Fa. Erichsen
- Glanzmessgerät (z.B. BYK haze-gloss) DIN 67530
- Farbtiefemessgerät (Densitometer)
- Durchgefärbte, schwarze Planglasscheiben 180 x 80 x 6 mm

**Herstellung und Prüfung des glänzenden Prüflackes**

Die einzelnen Lackrohstoffe für den 2-Komponenten-Prüflack werden in der nachfolgend angegebenen Reihenfolge nacheinander eingewogen und mit dem Laborrührer homogenisiert.

**Lack-Rezeotur 2 (2K-Referenzlack im Sinne der Erfindung)**

| Lackrohstoff | Gewichtsanteil in % |
|---|---|
| Butylacetat 98 % | 8.3 |
| Ethoxypropylacetat | 16.5 |
| Desmophen 800 (Fa. Bayer AG, Produktdatenblatt v. 20.04.2002) | 15.0 |
| Desmophen 1100 (Fa. Bayer AG, Produktdatenblatt v. 20.04.2002) | 20.0 |
| CAB 381-0.5 (10 %ig in Butylacetat 98 %, Fa. Eastman, Produkt-datenblatt v. 30.09.2003) | 3.0 |
| Mowilith 20 (50 %ig in Ethylacetat) (Kremer Pigmente, Produktdatenblatt v. 14.05.2004) | 3.0 |
| Baysilone OL 17 (10 %ig in Xylol) (Fa. Borchers, Produkt-information v. 12.12.2002) | 0.1 |
| BYK 361 (Fa. BYK-Chemie, Produktdatenblatt v. 05/2003) | 0.3 |
| Xylol | 33.8 |
| **Summe** | **100.0** |

Der glänzende Prüflack wird bzgl. Auslaufzeit (Sollwert: 14 -15 s) und Einbrennrückstand (Sollwert: 36.0 ± 0.5 %) geprüft.

**Herstellung und Prüfung des mattierten Prüflackes**

Vor Verwendung wird der Glanzlack mit dem Flügelrührer homogenisiert. Zu 150 g des 2-Komponenten-Prüflacks wird Fällungskieselsäure bzw. des Silicagels gemäß den in den Tabellen 4 und 5 angegebenen Einwaagen eingewogen.

Nach sorgfältiger Einarbeitung mit Hilfe eines Spatels wird das Mattierungsmittel in einem 350 ml PE-Becher mit einem Flügelrührer (4 cm Durchmesser) 10 min bei 2000 U/min dispergiert. Nach Dispergierung des Mattierungsmittels lässt man den Lack zur Entlüftung 24 h ruhen. Danach wird die Viskosität des mattierten Prüflacks mittels des Haake Viskosimeter $6^R$ bei 6 U/min und bei 60 U/min sowie deren Verhältnis wie folgt bestimmt (s. Tabelle 4):

Kurz vor Beginn der Messung wird das Viskosimeter (Haake Viskosimeter $6^R$) eingeschaltet, der Selbsttest durchgeführt und Spindelgröße und Umdrehungszahl am Gerät eingestellt. Die Spindel wird am Viskosimeter eingesetzt und bis zur Markierung am Spindelschaft in den Lack eingetaucht. Das Viskosimeter wird gestartet. Man lässt die Spindel 2 min im Lack rotieren und liest dann den Messwert für die Einstellung bei 6 U/min ab. Danach lässt man die Spindel weitere 2 Minuten im Lack rotieren und liest abschließend den Messwert für die Einstellung bei 60 U/min ab. Die Vorbereitungen und die Messung werden bei 23 °C und 50 % r.F. durchgeführt.

Anschliessend wird der mattierte 2-Komponenten-Prüflack mit 50 g Härter Desmodur L 75 versetzt und mit dem Laborrührer (4 cm Durchmesser), 2 min bei 1000 U/min homogenisiert. Nach erfolgter Homogenisierung lässt man den Lack erneut 30 min ruhen. Die Applikation des mattierten 2-Komponenten-Prüflacks erfolgt mit dem Filmziehgerät Coatmaster 509 MC, Aufziehgeschwindigkeit 25 mm/s und einem Filmziehrahmen mit der Spalthöhe von 150 µm auf eine gereinigte schwarze Planglasscheibe. Die Ablüftzeit beträgt 25 bis 30 Minuten bei einer Raumtemperatur von 21 bis 23 °C und einer relativen Luftfeuchte von 40 bis 60 %. Im Anschluß daran werden die Glastafeln 2 Stunden bei 50 ± 2°C im Trockenschrank getrocknet. Nach Abkühlung auf Raumtemperatur werden Schichtdicke, 60°-Reflektometerwert, 85°-Reflektometerwert und Density (Gelbfilter) bestimmt und der Sheen (= 85°-Reflektometerwert - 60°-Reflektometerwert) errechnet (s. Tabelle 4).

In Tabelle 4 sind die Daten dargestellt, die nach Einarbeitung verschiedener Fällungskieselsäuren und Silicagele in den 2-Komponenten-Lack bei gleicher Einwaage ermittelt werden. Die Daten zeigen, dass die erfindungsgemäßen oberflächenmodifizierten Silicagele eine vergleichbare, teilweise sogar verbesserte Transparenz (Density) und Mattierungseffizienz aufweisen als die Vergleichsbeispiele. Der Vorteil der erfindungsgemäßen oberflächenmodifizierten Silicagele wird in den Ergebnissen der Viskositätsmessung besonders deutlich.

Bei geringer Scherung wird Viskosität des Lackes durch die erfindungsgemäßen oberflächenmodifizierten Silicagele kaum erhöht, wogegen die Viskosität durch die Vergleichsbeispiele drastisch erhöht wird.

Während die Vergleichsbeispiele selbst bei starker Scherung noch die Viskosität des Lackes erhöhen, wird der Lack durch die erfindungsgemäßen oberflächenmodifizierten Silicagele fast nicht beeinflusst.

Der niedrige Thixotropieindex TI 6/60 der erfindungsgemäßen oberflächenmodifizierten Silicagele zeigt, dass sich die Viskosität im gescherten Zustand nur unwesentlich gegenüber dem ungescherten Zustand verringert, wogegen in den Vergleichsbeispielen die durch deren Zugabe stark erhöhte Viskosität des Lackes im ungescherten Zustand

durch die Scherung sehr stark beeinträchtigt wird.

Für die Ermittlung der Daten in Tabelle 5 wird dem 2-Komponenten-Lack so viel an Fällungskieselsäure bzw. Silicagel zugeben, dass sich im getrockneten Lack ein vergleichbarer 60°-Reflektometerwert von 23-25 ergibt. Für die erfindungsgemäßen Silicagele wird für eine vergleichbare Mattierungseffizienz in etwa genau so viel Produkt benötigt wie bei den Vergleichsbeispielen auf Basis von Silicagelen (Vergleichsbeispiel 3 und 4).

Die Transparenz (Density) der erfindungsgemäßen oberflächenmodifzierten Silicagele liegt deutlich über der der Vergleichsbeispiele.

Tabelle 4:

| 2-Komponenten-Lack bei gleicher Einwaage | | | | | |
|---|---|---|---|---|---|
| **Silicagel/Kiesel- säure aus Beispiel** | **Einwaage** | **Viskosität bei 6 U/ min** | **Viskosität bei 60 U/ min** | **TI 6/60** | **Density** |
| | [g] | [mPa*s] | [mPa*s] | | |
| 1 | 18 | 821 1) | 209 1) | 3.93 | 2.52 |
| 2 | 18 | 616 1) | 166 1) | 3.71 | 2.55 |
| 3 | 18 | 263 1) | 123 1) | 2.14 | 2.54 |
| V 1 | 18 | 1329 1) | 284 1) | 4.68 | 2.23 |
| V 2 | 18 | 15430 2) | 1890 2) | 8.16 | 1.35 |
| V 3 | 18 | 6370 2) | 720 1) | 8.85 | 2.40 |
| V 4 | 18 | 1639 1) | 324 1) | 5.06 | 2.41 |
| **2-Komponenten- Lack ohne Silicagel** 3) | 18 | 0 1) | 40 1) | - | 2.70 |

1) gemessen mit Spindel R 2

2) gemessen mit Spindel R 4

3) Weitere Viskositätsmesswerte: Viskosität bei 20 U/min = 25 mPa*s
Viskosität bei 200 U/min = 70 mPa*s
TI 20/200 = 0.36

Tabelle 5:

| **2-Komponenten-Lack bei gleichem 60°-Reflektometerwert** | | | | | | |
|---|---|---|---|---|---|---|
| **Silicagel/Kieselsäure aus Beispiel** | **Einwaage** 1) | **Schichtdicke** | **60°-Reflekto-** | **85°-Reflekto-** | **Sheen** | **Density** |
| | [g] | [µm] | [%] | [%] | [%] | |
| **1** | 18.0 | 32 | 23.6 | 53.2 | 29.6 | 2.38 |
| **2** | 18.9 | 32 | 22.6 | 52.0 | 29.4 | 2.32 |
| **3** | 21.0 | 32 | 23.0 | 53.3 | 30.3 | 2.46 |
| **V1** | 16.2 | 32 | 24.3 | 56.6 | 32.3 | 2.48 |
| **V2** | 11.25 | 32 | 23.2 | 57.8 | 34.6 | 2.30 |
| **V3** | 15.75 | 32 | 23.9 | 70.4 | 46.5 | 2.40 |
| **V4** | 18.75 | 32 | 24.3 | 62.8 | 38.5 | 2.30 |

1) bezogen auf 100 g unmattierten Lack

**Beispiel 6**

**Sedimentationsverhalten in einem Nitrocelluloselack**

Anhand von chemisch-physikalischen Daten von Kieselsäuren können keine Rückschlüsse auf das Schwebe- und Redispergierverhalten dieser Substanzen in einem Lack gezogen werden. Aufgrund dieser Erkenntnis ist eine

anwendungstechnische Prüfung in einem entsprechenden Lacksystem erforderlich.

Geräte und Lackrohstoffe

- Laborflügelrührer
- Waage
- PE-Becher, 170ml
- Auslaufbecher DIN 53211, 4mm
- Stoppuhr
- Trockenschrank
- Zentrifuge Jouan CT 4.22
- Glasflaschen, transparent, 50 ml, Enghals

**Arbeitsvorschrift**

Die Lösemittel Pos. 1 bis 4 werden vorgelegt und mit dem Flügelrührer gemischt. Die NC-Chips E 510 werden unter Rühren zugegeben und mit dem Flügelrührer gelöst. Danach werden die Pos. 6 -10 unter ständigem Rühren dem Lack hinzugegeben.

**Lack-Rezeptur 3**

| **Pos.** | **Rohstoff** | **Gewichts- anteil in %** |
|---|---|---|
| 1 | Toluol | 15.0 |
| 2 | Butanol | 10.0 |
| 3 | Ethylacetat | 10.0 |
| 4 | Butylacetat 85% | 10.0 |
| 5 | NC-Chips E 510 (82 % NC 18 % DBP) (Fa. Wolff cellulosics, Produktinformation aus Internet v. 23.03.2004) | 12.0 |
| 6 | Dibutylphthalat (DBP) | 1.0 |
| 7 | Rizinusöl 18 P geblasen | 2.0 |
| 8 | Jägalyd E 42, 60%-ig in Xylol (Fa. Eastman Chemicals, Fax v. 17.05.2004) | 10.0 |
| 9 | Alresat KM 313, 50%-ig in Ethylacetat:Butylacetat (85%) 1:1 (Fa. Clariant) | 20.0 |
| 10 | Benzin 100/140 | 10.0 |
| | **Summe** | **100.0** |

Die Auslaufzeit dieses Lackes wird mit dem DIN-Becher (Ø Auslaufdüse = 4 mm) gemessen und mit dem nachfolgenden Lösemittelgemisch auf eine Auslaufzeit von 40 s bei 23°C eingestellt.

| **Pos.** | **Rohstoff** | **Gewichts- anteil in %** |
|---|---|---|
| 1 | Butylacetat 85% | 30.0 |
| 2 | Ethylacetat | 30.0 |
| 3 | Toluol | 30.0 |
| 4 | Butanol | 10.0 |
| | **Summe** | **100.0** |

**Herstellung und Prüfung des Mattlackes**

Auf 40 g Lack werden 0.4 g Fällungskieselsäure bzw. Silicagel in einen Polyethylenbecher (170 ml) eingewogen und anschließend mit dem Spatel vollständig eingearbeitet. Danach wird das Mattierungsmittel 10 min bei 2000

U/min mit einem Flügelrührer (4 cm Durchmesser) dispergiert. Während dieses Vorganges ist der Becher abgedeckt.

Ca. 40 g mattierter Lack wird in Glasflaschen gefüllt. Die Glasflaschen werden verschraubt. Die Zentrifuge wird mit Glasflaschen bestückt. Es wird für eine Zeitdauer von 14 h mit folgenden Einstellungen zentrifugiert.

| Programmpunkt | Einstellung |
|---|---|
| Radius | 185mm |
| Zeit/Integral | 1 |
| Zeit/Dauerlauf | 0m0s |
| Temperatur | 35 °C |
| Delta Temperatur | +4 °C |
| Beschleunigung | 0 |
| Bremsen | 0 |
| Drehzahl/RZB | 0 |
| RZB | 15g |
| Kühlung | aus |

Zur Beurteilung werden die Fläschchen auf Raumtemperatur abgekühlt. Um die Beschaffenheit des Bodensatzes zu prüfen, werden die Fläschchen in einem Flaschenhalter auf den Kopf gestellt und das Ablaufen der mattierungsmittelhaltigen Phase beobachtet.

Anschließend werden die Glasflaschen 2 mal mit der Hand geschüttelt. Ist visuell kein Bodensatz zu erkennen, wird mit der Nadel am Boden der Flasche gekratzt. Mit dieser Behandlung werden auch noch hauchdünne, unerwünschte Ablagerungen festgestellt.

Die Beschaffenheit des Bodensatzes wird folgendermaßen bewertet:

1 = keine Trennung von Lack und Mattierungsmittel
2 = lockerer Bodensatz (Das Sediment läuft völlig vom Boden ab und läßt sich durch ein- bis zweimaliges Umschwenken dispergieren.)
3 = weicher Bodensatz (Das Sediment läuft nicht vollständig vom Boden ab, kann aber durch mehrfaches Schütteln noch dispergiert werden.)
4 = weicher Bodensatz, schwer aufrührbar (Das Sediment ist noch weich, aber bereits so stark agglomeriert, dass es durch Schütteln nicht mehr ausreichend dispergiert werden kann.)
5 = fester Bodensatz

Das Sedimentationsverhalten der Beispiele 1 - 3 sowie der Vergleichsbeispiele 1 - 3 sind in Tabelle 6 angegeben.

**Beispiel 7:**

**Bestimmung des Ablöseverhaltens in Ethoxypropylacetat**

Mattierungsmittel auf Kieselsäurebasis werden zur Verhinderung von Sedimentation in Lacken mit organischen Substanzen nachbehandelt. Für die Anwendung in Lacken ist wichtig, dass das Coatungsmittel fest an der Kieselsäureoberfläche adsorbiert ist und durch Einwirkung von Lackbestandteilen nicht abgelöst werden kann. Mit dieser Prüfung kann eine Ablösung des Coatungsmittels erkannt und damit ungeeignete Coatungsmittel identifiziert werden.

**Geräte**

- Laborrührer PE-Becher
- Weithals-Glasflaschen, 50 ml
- Lacktrockenschrank

**Arbeitsvorschrift**

Zu 35 g Ethoxypropylacetat wird 1 g oberflächenmodifiziertes Silicagel oder Fällungskieselsäure eingewogen. Die Suspension wird in einem PE-Becher mit einem Flügelrührer (Durchmesser: 40 mm) 10 min bei 1000 U/min dispergiert und in eine 50 ml-Weithalsflasche aus Glas umgefüllt. Anschließend wird die Glasflasche 24 Stunden bei 50 °C in einem Lacktrockenschrank gelagert. Nach der Abkühlung der Suspension werden gebildetes Sediment und die überstehende flüssige Phase visuell beurteilt (s. Tabelle 6).

Eine Ablösung der organischen Anteile drückt sich dadurch aus, dass sich an der Glasinnenseite in Höhe der Grenzfläche Flüssigkeit/Luft Ablagerungen bilden, die durch einfaches Schütteln nicht redispergiert werden können. In der Regel lässt sich anhand der visuellen Beurteilung gut erkennen, ob diese Ablagerungen überwiegend aus dem verwendeten Coatungsmittel, oder aus gecoateter Kieselsäure bestehen. Ist der visuelle Befund unklar, kann eine unterstützende Untersuchung zur Identifikation der Ablagerung (z.B. IR-Spektroskopie) durchgeführt werden.

**Beispiel 8:**

**Bestimmung der Verfärbung in einem SH-Lack**

Mit dieser Prüfmethode sollen Mattierungsmittel auf ihre Verfärbung in einem SH-Lack durch Vergleich mit dem entsprechenden Laborstandard (weiße Farbe) des jeweiligen Mattierungsmittels bzw. einem Negativstandard, der die geringste unzulässige Verfärbung aufweist, untersucht werden.

**Geräte**

- Laborflügelrührer (Durchmesser: 4 cm)
- PE-Becher 170ml
- Spatel
- Präzisionswaage (Wägegenauigkeit 0,01 g)
- 50 ml Glas-Enghalsflaschen
- evtl. Zentrifuge.

**Prüfung auf Verfärbung**

Aus den nachfolgend angegebenen Lackrohstoffen wird der Prüflack für die Verfärbung mittels Dispergierung hergestellt. Dazu werden die einzelnen Rohstoffe nacheinander eingewogen und mit einem Flügelrührer bis zur völligen Homogenisierung gemischt. Anschließend werden 50 Gew.-Tle. Lack in einem 170 ml PE-Becher vorgelegt und 1.3 Gew.-Tle. Mattierungsmittel eingewogen und sorgfältig mit einem Spatel eingerührt. Anschließend wird mit dem Laborflügelrührer 10 min bei 2000 $min^{-1}$ dispergiert und ca. 40 g der Proben in 50 ml-Glas-Enghalsflaschen eingefüllt. Die Glasflaschen werden verschraubt. Durch 5-tägige Lagerung bei Raumtemperatur wird das Mattierungsmittel zur Sedimentation gebracht.

**Lack-Rezeptur 4**

| Pos. | Lackrohstoff | Gewichtsanteil in % |
|---|---|---|
| 1 | Plastopal BT, 60 %ig in Butanol (Fa. BASF, Produktinformation v. 07/1994) | 39.6 |
| 2 | Xylol | 30.2 |
| 3 | Ethoxypropanol | 15.1 |
| 4 | Ethanol | 15.1 |
| | **Summe** | **100.0** |

Während der Beurteilung der Verfärbung werden die Proben auf einen weißen Untergrund gestellt, wobei Durchlicht von der Rückseite gewährleistet sein muss. Zur Beurteilung der Verfärbung werden die Deckel der Probenflaschen entfernt, da Reflexionen der schwarzen Deckel Unterseite zu einer scheinbaren Verfärbung führen. Die Ergebnisse sind in Tabelle 6 festgehalten.

Aus Tabelle 6 wird ersichtlich, dass durch die Oberflächenmodifizierung die Neigung zur Sedimentation von Silicagelen oder Fällungskieselsäuren im Lack stark erniedrigt wird. Während durch die bekannten Mittel und Verfahren zur Oberflächenmodifizierung Sedimentationswerte von maximal 2 erreicht werden, kann durch die erfindungsgemäße Oberflächenmodifizierung, wie sie am Beispiel 2 gezeigt wird, sogar auf den Sedimentationswert von 1 angehoben werden, d.h. es ist auch über einen längeren Zeitraum keine Neigung zur Sedimentation zu erkennen.

Während bei den Vergleichsbeispielen 3 und 4 das Mittel zur Oberflächenmodifizierung durch die Einwirkung von Ethoxypropylacetat von der Oberfläche des Silicagels entfernt werden kann, ist eine solche Beeinträchtigung bei den erfindungsgemäßen oberflächenmodifizierten Silicagelen nicht zu beobachten.

Häufig ist durch die Zugabe des Mattierungsmittels gelbliche Verfärbung des Lacks zu beobachten, wie anhand der Vergleichsbeispiele gezeigt. Dem gegenüber zeichnen sich die erfindungsgemäßen oberflächenmodifizierten Silicagele dadurch aus, dass der Lack auch nach Zugabe des Mattierungsmittels klar bleibt.

Tabelle 6:

| **Nitrocellulose-Lack - Sedimentationsverhalten** | | | | |
|---|---|---|---|---|
| **Silicagel/Kieselsäure aus Beispiel** | **Oberflächen-modifiziert** | **Sedimentations-verhalten** | **Ablöse-verhalten** | **Verfärbung** |
| 2 | Ja | 3 | Nein | klar |
| 3 | ja | 1 | Nein | klar |
| V 1 | nein | 5 | - | Gelblich |
| V 2 | ja | 2 | Nein | Leicht |
| V 3 | ja | 2 | Ja | Leicht |
| V 4 | ja | 2 | Ja | Leicht |

## Patentansprüche

1. Oberflächenmodifiziertes Silicagel,
**dadurch gekennzeichnet,**
**dass** es die Viskosität eines 2-Komponenten-Referenzlackes, der 10.7 Gew.-% des oberflächenmodifizierten Silicagels enthält und der nach Herstellung und Zugabe des oberflächenmodifizierten Silicagels 1 Tag bei 23 °C und 50 % relativer Feuchte (r.F.) gelagert wurde, derart beeinflußt, dass der Thixotropieindex TI 6/60 kleiner gleich 4.5 ist.

2. Oberflächenmodifiziertes Silicagel nach Anspruch 1,
**dadurch gekennzeichnet,**
**dass** es die Viskosität eines 2-Komponenten-Referenzlackes, der 10.7 Gew.-% des oberflächenmodifizierten Silicagels enthält und der nach Herstellung und Zugabe des oberflächenmodifizierten Silicagels 1 Tag bei 23 °C und 50 % relativer Feuchte (r.F.) gelagert wurde, derart beeinflußt, dass der Thixotropieindex TI 6/60 kleiner gleich 4.0 ist.

3. Oberflächenmodifiziertes Silicagel nach einem der Ansprüche 1 oder 2,
**dadurch gekennzeichnet,**
**dass** es die Viskosität eines 2-Komponenten-Referenzlackes, der 10.7 Gew.-% des oberflächenmodifizierten Silicagels enthält und der nach Herstellung und Zugabe des oberflächenmodifizierten Silicagels 1 Tag bei 23 °C und 50 % relativer Feuchte (r.F.) gelagert wurde, im gering gescherten Zustand auf maximal 1200 mPa*s erhöht.

4. Oberflächenmodifiziertes Silicagel nach Anspruch 3,
**dadurch gekennzeichnet,**
**dass** es die Viskosität eines 2-Komponenten-Referenzlackes, der 10.7 Gew.-% des oberflächenmodifizierten Silicagels enthält und der nach Herstellung und Zugabe des oberflächenmodifizierten Silicagels 1 Tag bei 23 °C und 50 % relativer Feuchte (r.F.) gelagert wurde, im gering gescherten Zustand auf maximal 900 mPa*s erhöht.

**5.** Oberflächenmodifiziertes Silicagel nach einem der Ansprüche 1 bis 4,
**dadurch gekennzeichnet,**
**dass** es die folgenden physikalisch-chemischen Daten aufweist:

| | |
|---|---|
| mittlere Partikelgröße $d_{50}$ | 0.5 - 50 µm |
| DBP | 100 - 600 g/100 g |
| BET | 100 - 1000 $m^2/g$ |
| Kohlenstoffgehalt | 0.5 - 20 % |

**6.** Oberflächenmodifiziertes Silicagel nach einem der Ansprüche 1 bis 5,
**dadurch gekennzeichnet,**
**dass** das es ein Mesoporenvolumen im Bereich von 2 bis 50 nm von mindestens 1.0 ml/g aufweist.

**7.** Oberflächenmodifiziertes Silicagel nach einem der Ansprüche 1 bis 6,
**dadurch gekennzeichnet,**
**dass** das es einen Span < 1.3 aufweist.

**8.** Oberflächenmodifiziertes Silicagel nach einem der Ansprüche 1 bis 7,
**dadurch gekennzeichnet,**
**dass** die Oberfläche des Silicagels mit einem Polyorganosiloxan oder einem modifizierten Polyorganosiloxan belegt ist.

**9.** Oberflächenmodifiziertes Silicagel nach Anspruch 8,
**dadurch gekennzeichnet,**
**dass** die Oberfläche des Silicagels mit einem Polyorganosiloxan mit folgender allgemeiner Struktur:

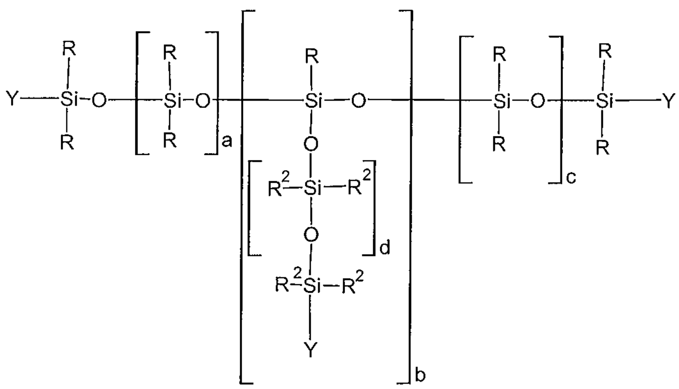

wobei

Y = -OH, -OR oder
Y = $H_5C_2-O-(C_2H_4O)_m-$, $H_7C_3-O-(C_3H_6O)_m-$ oder
Y =

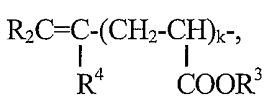

R = -Alkyl insbesondere Methyl oder Ethyl,
$R^2$ = Alkyl oder H,
$R^3$ = Alkyl,
$R^4$ = H oder Alkyl,
a = 0 - 100, b = 0-100, c= 0-100, d = 0-100,
m = 0-100 und k = 0-100 ist,

belegt ist.

**10.** Oberflächenmodifiziertes Silicagel nach Anspruch 8,
**dadurch gekennzeichnet,**
**dass** die Oberfläche des Silicagels mit einem Polyorganosiloxan mit folgender allgemeiner Struktur:

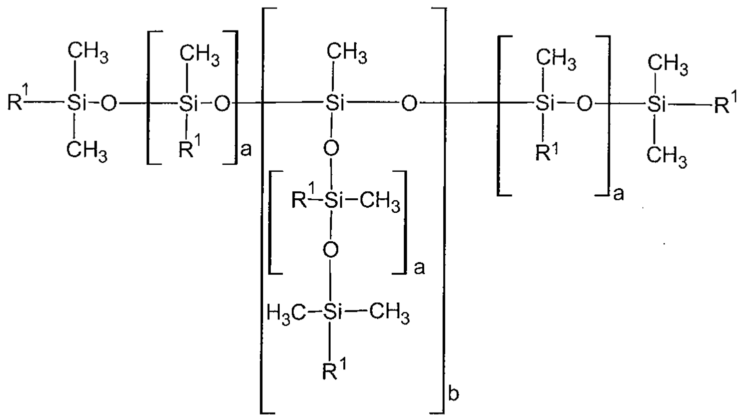

wobei

$R_1$ = ein Methylrest oder
$R_1$ =

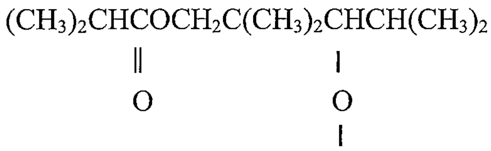

und/oder

$R_1$ =

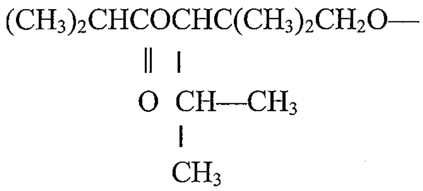

ist und die Summe der Einheiten a = 0 bis 100, die Summe der Einheiten b = 0 bis 15 ist, wobei bei den Resten $R^1$ das Verhältnis von Methyl- zu Alkoxyresten kleiner 50 :1 ist und b > 1 ist, wenn a = 0 ist und a > 5 ist, wenn b = 0 ist,
belegt ist.

**11.** Verfahren zur Herstellung eines oberflächenmodifizierten Silicagels nach einem der Ansprüche 1 bis 10,
**dadurch gekennzeichnet,**
**dass** die Oberfläche eines Silicagels mit einem Polymer modifiziert wird.

**12.** Verfahren nach Anspruch 11,
**dadurch gekennzeichnet,**
**dass** es sich bei dem Polymer um ein Polyorganosiloxan oder ein modifiziertes Polyorganosiloxan handelt.

**13.** Verfahren nach Anspruch 12,

**dadurch gekennzeichnet,**
**dass** es sich bei dem Polymeren um ein Polyorganosiloxan mit folgender allgemeiner Struktur handelt:

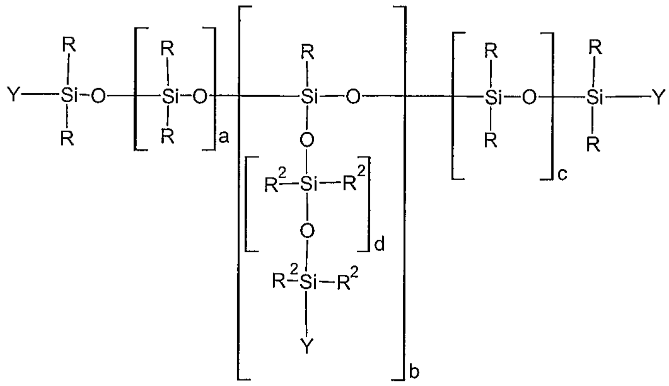

wobei

Y = -OH, -OR oder
Y = $H_5C_2$-O-$(C_2H_4O)_m$-, $H_7C_3$-O-$(C_3H_6O)_m$- oder
Y = 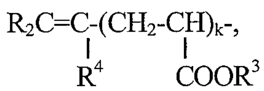

R = -Alkyl insbesondere Methyl oder Ethyl,
$R^2$ = Alkyl oder H,
$R^3$ = Alkyl,
$R^4$ = H oder Alkyl,
a = 0 - 100, b = 0-100, c= 0-100, d = 0-100,
m = 0-100 und k = 0-100 ist.

**14.** Verfahren nach Anspruch 13,
**dadurch gekennzeichnet,**
**dass** es sich bei dem Polymeren um ein Polyorganosiloxan mit folgender allgemeiner Struktur handelt:

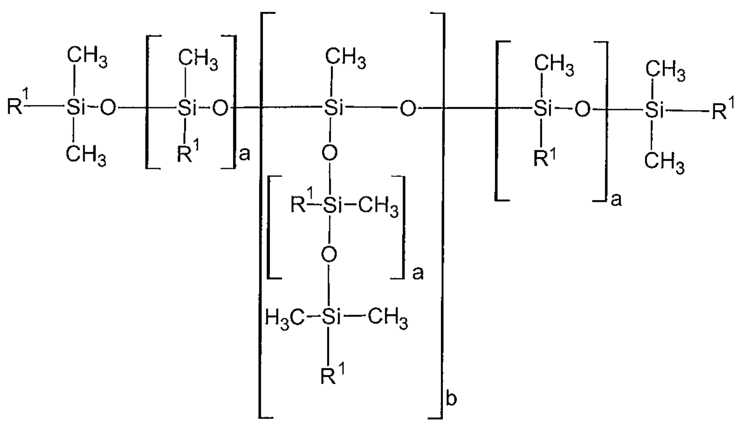

wobei

$R_1$ = ein Methylrest oder
$R_1$ =

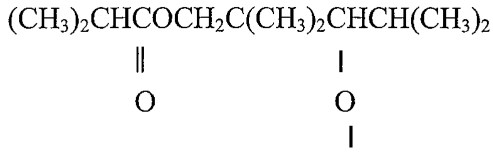

und/oder

$R_1$ =

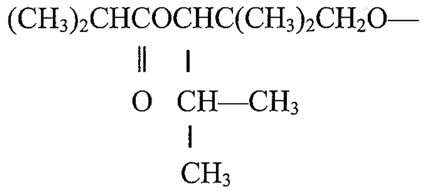

ist und die Summe der Einheiten a = 0 bis 100, die Summe der Einheiten b = 0 bis 15 ist, wobei bei den Resten $R^1$ das Verhältnis von Methyl- zu Alkoxyresten kleiner 50 : 1 ist und b > 1 ist, wenn a = 0 ist und a > 5 ist, wenn b = 0 ist.

**15.** Verfahren nach einem der Ansprüche 10 bis 14,
**dadurch gekennzeichnet,**
**dass** es die Schritte

a) Vorvermahlung des Hydrogels
b) Trocknung des Hydrogels zum Xerogel
c) Vermahlung des Xerogels
d) Oberflächenmodifizierung

umfasst.

**16.** Verfahren nach Anspruch 15
**dadurch gekennzeichnet,**
**dass** Schritt d) vor oder während mindestens einem der Schritte a) bis c) durchgeführt wird.

**17.** Verfahren nach einem der Ansprüche 15 oder 16,
**dadurch gekennzeichnet,**
**dass** das Polymer in Schritt d) unverdünnt als Reinsubstanz oder in verdünnter Form als wässrige Emulsion zugegeben wird.

**18.** Verfahren nach einem der Ansprüche 15 bis 17,
**dadurch gekennzeichnet,**
**dass** in Schritt a) oder in Schritt d), sofern dieser vor Schritt a) ausgeführt wird, ein Hydrogel mit folgenden physikalisch-chemischen Eigenschaften verwendet wird:

$SiO_2$-Anteil: ≥ 5 %, bevorzugt 20 - 40 %,
BET-Oberfläche: 200 - 500 $m^2$/g, bevorzugt 250- 400 $m^2$/g.

**19.** Verfahren nach einem der Ansprüchen 15 bis 18,
**dadurch gekennzeichnet,**
**dass** Schritt d) vor Schritt b) durchgeführt wird.

**20.** Verfahren nach den Anspruch 19,
**dadurch gekennzeichnet,**
**dass** das Hydrogel in Schritt d) mit 0.2 bis 12 Gew.%, vorzugsweise mit 0.5 bis 5 Gew.-% des Polymers bezogen

auf das Hydrogel vermischt wird.

**21.** Verfahren nach einem der Ansprüche 15 bis 20,
**dadurch gekennzeichnet,**
**dass** in Schritt b) die Trocknung mittels Sprühtrockner oder Mahltrockner oder Stromtrockner oder Spinflashtrockner durchgeführt wird.

**22.** Verfahren nach einem der Ansprüche 15 bis 18,
**dadurch gekennzeichnet,**
**dass** Schritt d) nach Schritt b) aber vor Schritt c) durchgeführt wird.

**23.** Verfahren nach einem der Ansprüche 15 bis 18,
**dadurch gekennzeichnet,**
**dass** Schritt d) während Schritt c) durchgeführt wird.

**24.** Verfahren nach einem der Ansprüche 15 bis 23,
**dadurch gekennzeichnet,**
**dass** die Vermahlung in Schritt c) mittels Luftstrahl- oder Dampfstrahlmühle oder Fließbettgegenstrahlmühle erfolgt.

**25.** Verfahren nach einem der Ansprüchen 15 bis 24,
**dadurch gekennzeichnet,**
**dass** nach der Trocknung des oberflächenmodifizierten Silicagels oder nach oder während der Vermahlung Partikel mit einem Durchmesser über 50 µm abgetrennt werden.

**26.** Verwendung eines oberflächenmodifizierten Silicagels gemäß einem der Ansprüche 1 bis 10 oder hergestellt nach einem der Ansprüche 11 bis 25 als Mattierungsmittel in Farben und Lacken, als Bestandteil von Papierbeschichtungen, als Entschäumerformulierung, als Verstärker im Silikonkautschuk und/oder in Kunststoff-Anwendungen als Antiblockingmittel.

**27.** Lackformulierung, enthaltend oberflächenmodifizierte Silicagele gemäß mindestens einem der Ansprüche 1 bis 10 oder hergestellt nach einem der Ansprüche 11 bis 25.